## Europäisches Patentamt

## European Patent Office

## Office européen des brevets

(11) Publication number: **0 042 202**
**B1**

(12)
# EUROPEAN PATENT SPECIFICATION

(45) Date of publication of patent specification: **08.07.87**

(51) Int. Cl.⁴: **G 05 B 19/42,** G 05 B 19/23

(21) Application number: **81301026.1**

(22) Date of filing: **11.03.81**

(54) Automatic position controlling apparatus.

(30) Priority: **23.05.80 JP 69132/80**
**21.10.80 JP 148047/80**
**19.11.80 JP 163716/80**

(43) Date of publication of application:
**23.12.81 Bulletin 81/51**

(45) Publication of the grant of the patent:
**08.07.87 Bulletin 87/28**

(84) Designated Contracting States:
**DE FR GB SE**

(56) References cited:
**DE-A-3 043 098**
**FR-A-2 295 472**
**GB-A-1 561 661**
**US-A-3 878 983**
**US-A-4 260 940**

**Book of W. Simon "Die numerische Steuerung von Werkzeugmaschinen" (1971), Carl Hanser Verlag, p. 264-271**
**"Werkstattstechnik" 62 (1972), p. 554-559**

(73) Proprietor: **SHIN MEIWA INDUSTRY CO., LTD.**
**5-25 Kosone-cho 1-chome**
**Nishinomiya-shi Hyogo-ken (JP)**

(72) Inventor: **Fujinaga, Shigeki**
**Haimumiyakojima, 1-20 Higashinoda-cho 1-chome**
**Miyakojima-ku Osaka-shi Osaka-fu (JP)**
Inventor: **Noguchi, Fumio**
**4-303, 15, Yamamotomaruhashi 4-chome**
**Takarazuka-shi Hyogo-ken (JP)**
Inventor: **Tsuda, Eizo**
**23-22, Hinoike-cho**
**Nishinomiya-shi Hyogo-ken (JP)**
Inventor: **Shimazu, Yoshiaki**
**Takarazuka-ryo, 2-19 Shinmeiwa-cho**
**Takarazuka-shi Hyogo-ken (JP)**
Inventor: **Koyama, Hideo**
**7-11 Kawamo 5-chome**
**Takarazuka-shi Hyogo-ken (JP)**
Inventor: **Fukuoka, Hisahiro**
**Higashinaruo-ryo, 6-23 Higashinaruo-cho, 2-chome**
**Nishinomiya-shi Hyogo-ken (JP)**
Inventor: **Kume, Yoshiyuki**
**6-3 Koshien 6-bancho**
**Nishinomiya-shi Hyogo-ken (JP)**

Courier Press, Leamington Spa, England.

EP 0 042 202 B1

**0 042 202**

(74) Representative: **Wright, Peter David John et al**
**R.G.C. Jenkins & Co. 12-15, Fetter Lane**
**London EC4A 1PL (GB)**

# 0 042 202

## Description

Background of the invention
Field of the invention

The present invention relates to an automatic position controlling apparatus. More specifically, the present invention relates to an improved follow-up control in a position controlling apparatus using a playback system of a point-to-point type.

Description of the prior art

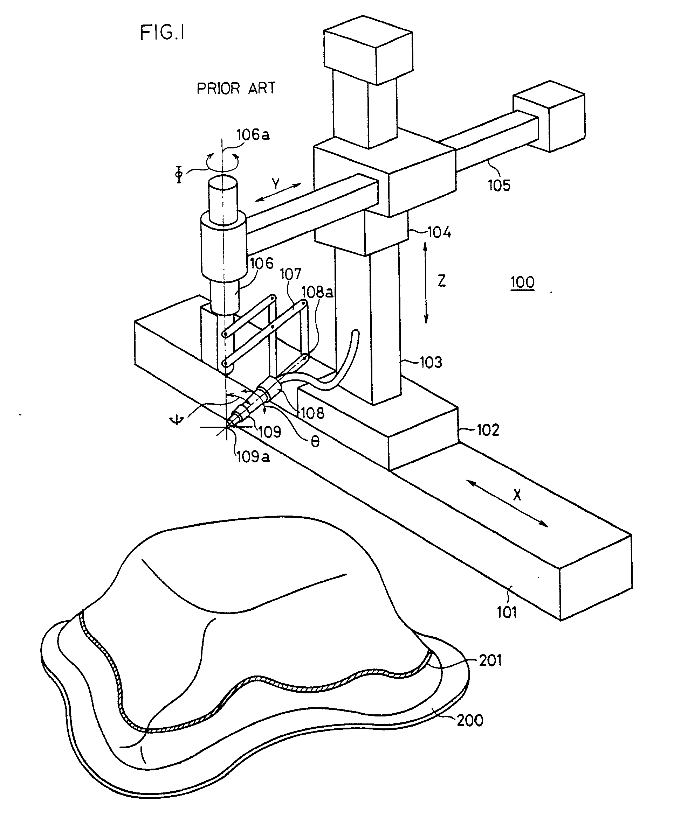

Fig. 1 is a perspective view showing one example of an automatic cutting apparatus which constitutes the background of the invention and wherein the present invention can be advantageously employed. The automatic cutting robot comprises a base 101 extending in a horizontal direction, i.e. an X axis direction and a first moving member 102 is borne on the base 101 to be movable in the X axis direction. The moving member 102 is integrally provided with a column 103 extending upright and a second moving member 104 is provided so as to be penetrated by the column 103 and to be movable in the vertical direction, i.e. in a Z axis direction. A beam 105 is further supported by the moving member 104 to be movable in the direction orthogonal to the X axis direction and the Z axis direction, i.e. in a Y axis direction. A shaft 106 is supported at the tip end of the beam 105 at the axis 106a extending in the same direction as the Z axis direction, the rotation angle of the shaft 106 being denoted by $\phi$. A fixture 108 or a cutting torch 109 is supported at the lower end of the shaft 106 by means of a balanced link means 107. The balanced link means 107 is structured such that the position of a working point 109a of the torch 109 may be at a predetermined point on the axis 106a even if an attitude angle $\psi$ of the torch 109 is variable and even in any value of the angle $\psi$. The fixture 108 is adapted such that the torch 109 fixed thereto may be rotatable about the axis 108a, the rotational angle thereof being represented by $\theta$. More specifically, the cutting robot 100 shown in Fig. 1 has sixth degrees of freedom of X, Y, Z, $\phi$, $\psi$ and $\theta$, and is additionally provided with driving systems for position control thereof and a control means such as a computer. A workpiece 200 is cut along a cutting line 201 of the workpiece 200 by means of the torch 109.

With a conventional robot using a playback system, a moving locus (path) of a means being controlled is prepared using linear or arcuate interpolation of the taught passing points, whereupon commanded position information of the means being controlled is obtained. According to such conventional approach, in addition to a problem of connection of paths, another problem was involved that the speed of paths and accuracy of positions are poor due to inertia and a response characteristic in operation of the means being controlled.

On the other hand, according to a robot of a continuous path system, such as disclosed in Japanese Patent Laying Open Gazette No. 31456/1976, it has been proposed that a new target value associated with a load or inertia of a driving system is evaluated based on the taught target values, whereby a follow-up control is achieved. However, the above described prior art can not be applied to a robot of a point-to-point type to which the present invention is directed. The reason is that in the case of a continuous path type the above described target values are represented as a function of time, whereas in the case of a point-to-point type the position information of the points to which the positions should be controlled and the speed information of the movement being controlled have been taught and therefore the target values has not been represented as a function of time. Accordingly, it is desired that there is provided a position controlling apparatus suited for a robot of a point-to-point type, which is implemented from a point of view entirely different from the above described prior art and that is capable of achieving a control with high speed and with high accuracy.

W. Simon "Die numerische Steurung von Werkzeugmaschinen" (1971), pub. Carl Hanser Verlag, describes on pages 264 to 271 the application of linear interpolation techniques to the automatic position control of movable devices. This reference lists a number of features of linear interpretation techniques, one of these features being constant speed of the device along the desired locus. This reference also discloses the determination of the position of the device at regular time intervals.

"Werkstattstechnik" 62 (1972) pp. 554—559 relates to the design of position control loops and discloses that position control loops have predetermined response times which have to be optimised in order to maximise their performance. US—A—3,878,983 discloses a numerically controlled machine tool wherein the problem of backlash is alleviated by modifying the input position data which determines the position of a cutting element manipulated by the tool.

According to the present invention, a system for the automatic position control of a movable device comprises:
means operable in a teaching mode of the system for inputting positional data of a plurality of designated points on a desired path of movement of said device; smoothing means for evaluating from said input positional data a formula defining a curve which smoothly connects said points, interpolation means for determining command positions along said curve; and drive means for driving said movable device in accordance with command data associated with said command positions, characterised in that said interpolation means is arranged to determine said command positions at regular time intervals and to cause said drive means to move the movable device at a substantially constant speed and in that there is provided means for predetermining a dead time and a first order delay in the response

3

characteristics of said drive means, means for connecting said command positions in accordance with said predetermined first order delay to generate command position information, and output delaying means for delaying the output of said command position information in accordance with said predetermined dead time said output delaying means comprising clock pulse generating means for generating clock pulses having a repetition frequency capable of time-counting said dead time, store means having a plurality of storage regions, the number of said storage regions being related to said dead time and said repetition frequency of said clock pulses, and means for sequentially shifting command position information entered into said store means from one storage region to the next.

The applicants have recognised that it is not necessarily required to smoothly connect taught points by means of such smoothing means, depending on the shape of a workpiece or the shape of a cutting line but rather cases can arise wherein a position control of a conventional approach such as a linear interpolation, for example, is to be preferred. Accordingly in a preferred embodiment, an automatic position controlling apparatus of a playback type is provided wherein smooth connection is achieved by means of such smoothing means as described in the foregoing but, if it is not required, such smoothing means is rendered ineffective, so that position control can be made with accuracy by usual linear interpolation between the taught points.

Another preferred embodiment of the present invention is directed to an industrial robot, wherein the weight of an arm upon which a particularly large inertia acts is decreased as much as possible. Therefore, according to the preferred embodiment, the inertia of the arm in operation can be made small even when an accelerating speed of a working tool or a means being controlled is large. Accordingly, the same position accuracy as in the case of a robot of a small accelerating speed of a working tool or a means being controlled of the prior art can be maintained. Furthermore, according to the embodiment, a load acting on a motor for a column remains little changeable both on the occasion of moving upward and downward and therefore a motor may be small sized and light weight.

In a further preferred embodiment of the present invention, an apparatus for positioning a workpiece suited for a particular workpiece is provided. More specifically, such positioning or supporting apparatus may be applied as an apparatus for positioning a workpiece as press formed, which is obtained by pouring a material settable as per the lapse of a period of time into a workpiece as press formed and by dipping a portion of a reinforcing material into the poured material and then forming a mold of the workpiece as press formed, whereupon the exposed portion of the reinforcing member from the above described material is mounted to a predetermined position of a supporting base. According to the workpiece positioning apparatus of the preferred embodiment, since the workpiece is positioned by mounting the mold including the above described material and the reinforcing member to the supporting base and covering the workpiece onto the mold, even in the case where the workpiece is a press formed workpiece which is of a very thin plate of such as an automobile body and is easily flexible, the same can always be positioned with accuracy and with ease. As a result, the preferred embodiment is particularly effective in automatically processing a workpiece of a very thin plate.

In still a further preferred embodiment of the present invention, the inventive automatic position controlling apparatus is applied to an improvement in a dummy torch such as in the case of a cutting or welding robot. According to the embodiment, a cutting or welding dummy torch is provided which comprises a hollow dummy torch main body, a tapered rod loosely fitted onto the tip end of the main body so as to be protrusile/retractile and to be urged to be protruded by a spring, and illuminating means including a light source mounted on the hollow portion of the main body and a light transmissive member guiding the light beam from the light source to the vicinity of the tip end of the rod. According to the dummy torch of the embodiment, since the rod is provided at the tip end of the main body so as to be protrusile/retractile and to be urged to be protruded by a spring, while the vicinity of the tip end of the rod is illuminated by the illuminating means, even when an operator erroneously operates the apparatus so that the tip end portion of the dummy collides with a workpiece, the rod is merely retracted against the spring, without damaging the dummy or the fixture or without bringing the position of a point being controlled to a wrong position. In addition, even when illumination in a factory is not sufficient or a workpiece is glossy, it is very easy to operate so as to coincide the position of a point being controlled with a position on the line with the naked eye, with the result that a remarkable advantage is brought about.

Accordingly, a principal object of the present invention is to provide an improved automatic position controlling apparatus of a point-to-point type and of a playback type, which comprises smoothing means for smoothly connecting the point positions in controlling the position between the point positions.

Preferred embodiments of the present invention are particularly suited for controlling a moving member at high speed.

Preferred embodiments of the invention are described below by way of example only with reference to the accompanying drawings.

Fig. 1 is an automatic cutting apparatus as one example of an automatic position controlling apparatus which constitutes the background of the invention and wherein the present invention can be advantageously employed;

Fig. 2 is a block diagram showing an outline of a position controlling apparatus wherein the present invention can be advantageously employed;

Fig. 3 is a view diagrammatically showing one example of an operation table;

4

**0 042 202**

Fig. 4 is a block diagram showing a positioning apparatus of an X axis;

Fig. 5 is a graph showing one example of a response characteristic of a positioning apparatus, wherein the abscissa indicates time and the ordinate indicates a target value;

Fig. 6 is a graph for explaining an approach for smoothly connecting the path;

Fig. 7 is a block diagram showing one example of an X axis positioning apparatus as corrected to be capable of treating a dead time;

Fig. 8 is a flow diagram for depicting an operation of one embodiment of the present invention;

Figs. 9A and 9B are views showing an automatic cutting apparatus as one example of an automatic position controlling apparatus in accordance with another embodiment of the present invention, wherein Fig. 9A is a side view and Fig. 9B is a plan view;

Fig. 10 is a view diagrammatically showing another example of an operation table;

Fig. 11 is a flow diagram for depicting setting of the speed information by a "SPEED" key;

Fig. 12 is a view showing one example of a working line for depicting an interpolating operation by an operation of an "αβ OFF" key;

Fig. 13 is a flow diagram depicting an interpolating operation taking the example of Fig. 12;

Fig. 14 is a flow diagram for depicting another embodiment for smoothing processing and for controlling a delay time;

Fig. 15 is a view showing one example of a working line for depicting the background of the embodiment;

Fig. 16 is a flow diagram for depicting an operation of another embodiment of the present invention;

Fig. 17 is a perspective view of a workpiece as press formed which is to be cut as one example of a workpiece;

Fig. 18A is a perspective view of a mold of a workpiece as press formed;

Fig. 18B is a front view, partially omitted, of the Fig. 18A workpiece;

Fig. 19A is a sectional view showing one example of a dummy torch having a tapered portion mounted at the tip end of a rod;

Fig. 19B is a sectional view showing a major portion of a dummy torch having a scriber mounted at the tip end of the rod; and

Fig. 20 is a flow diagram for depicting an operation of the embodiment employing the dummy torch.

Description of the preferred embodiments

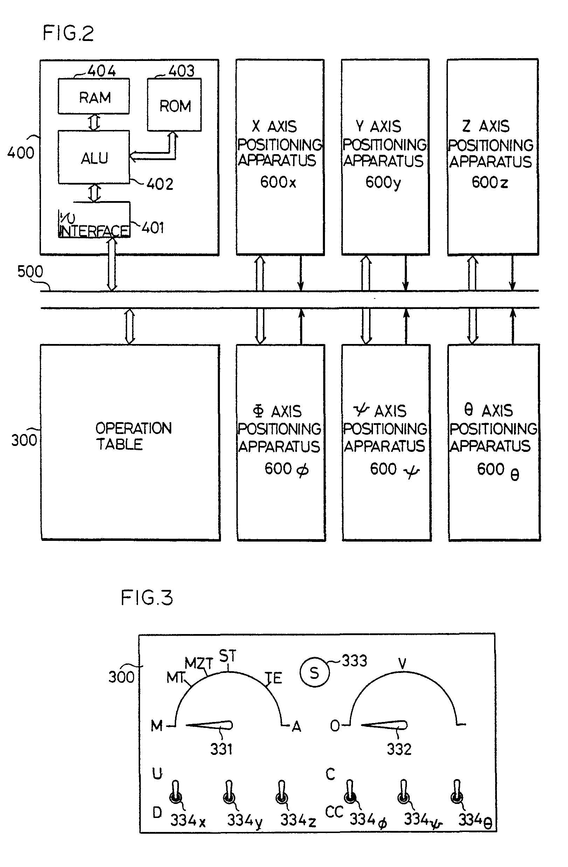

Fig. 2 is a block diagram showing an outline of an embodiment of the present invention for controlling the position of the robot 100 shown in Fig. 1. Referring to Fig. 2, an operation table 300, a computer 400 and axis positioning apparatuses $600_x$, $600_y$, $600_z$, $600_\phi$, $600_\psi$ and $600_\theta$ are coupled to a common bus 500.

The operation table 300 is shown in detail in Fig. 3 and comprises a mode selecting switch 331. The mode selecting switch 331 is adapted to set a manual mode at the position "M", a teaching mode through manual operation at the position "MT", a teaching mode through operation of an optical means for detecting a cutting line 201 of the workpiece 200 shown in Fig. 1 at the position "ST", a test mode at the position "TE" and an automatic mode at the position "A". The signals corresponding to the respective modes are obtained through the bus 500 from the mode selecting switch 331. The operation table 300 further comprises a cutting speed commanding switch 332 and a start button switch 333. The operation table 300 further comprises manual operation switches $334_x$, $334_y$, $334_z$, $334_\phi$, $334_\psi$ and $334_\theta$ for the respective axes. These switches are structured such that when the same are turned to the "U" side the torch 109 is moved in the direction away from the origin point along the respective control axes, whereas when the same are turned to the "D" side the torch is moved in the direction toward the original point along the respective control axes. The switches $334_\phi$, $334_\psi$ and $334_\theta$ are further adapted such that when the same are turned to the "C" side the rotation is controlled about the respective axes in the clockwise direction whereas when the same are turned to the "CC" side the rotation is controlled in the counterclockwise direction.

As well known, the computer 400 comprises an input/output interface circuit 401, an arithmetic logic unit 402, a read only memory 403 and a random access memory 404.

As the operation table 300 shown in Fig. 3 is operated, the commanded position information is applied from the computer 400 shown in Fig. 2 to the respective axis positioning apparatuses $600_x$ to $600_\theta$. At the same time, signals representing that the commanded position is reached are fedback from the these positioning apparatuses $600_x$ to $600_\theta$.

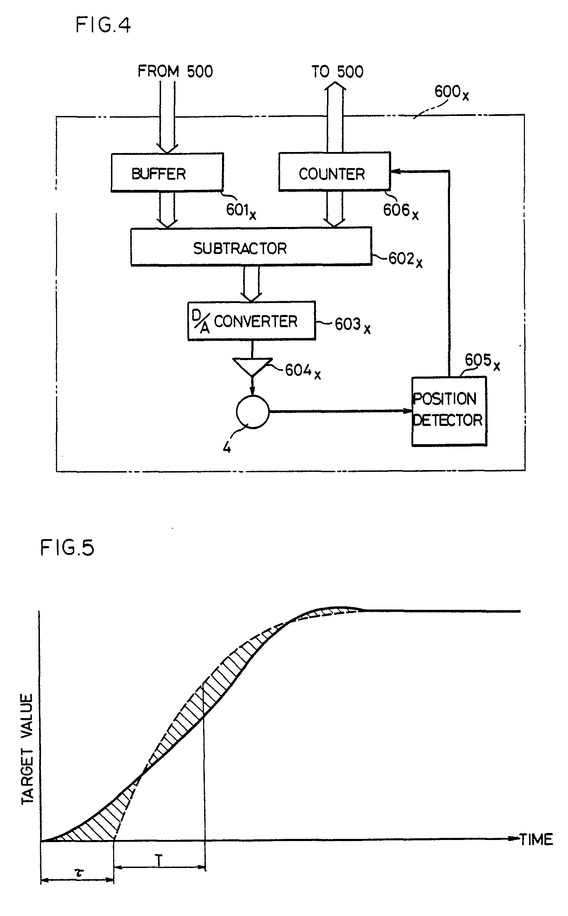

Fig. 4 is a block diagram of the X axis positioning apparatus $600_x$ representing the respective axis positioning apparatuses $600_x$ to $600_\theta$. Since the remaining positioning apparatuses $600_y$ to $600_\theta$ are structured in substantially the same manner as shown in Fig. 4, only the X axis positioning apparatus $600_x$ is described, while a description of the other axes positioning apparatuses will be omitted. The positioning apparatus $600_x$ comprises a buffer register $601_x$ for receiving commanded position information from the bus 500, i.e. the computer 400. The buffer $601_x$ is loaded with the commanded position information sent from the computer 400 at the time interval t. The output from the buffer $601_x$ is applied as one input to a subtractor $602_x$. The other input of the subtractor $602_x$ is supplied with the output of a counter $606_x$. The counter $606_x$ receives a position pulse signal from a position detector $605_x$ to be described subsequently (including an incremental encoder, for example) so that the output therefrom represents the current

5

position. The output from the subtractor $602_x$ is applied to a digital/analog converter $603_x$ as a difference between the buffer $601_x$ (a target point position) and the counter $606_x$ (the current position). The output from the digital/analog converter $603_x$ is applied to a servo-amplifier $604_x$ and the output from the servo-amplifier $604_x$ is applied to a well-known control means for controlling the rotation of a motor 4. Accordingly, these components $602_x$, $603_x$, $604_x$, $605_x$ and $606_x$ constitute an X axis driving system. A signal (data) of the position as driven by the driving system is further provided from the counter $606_x$ through the bus 500 to the computer 400.

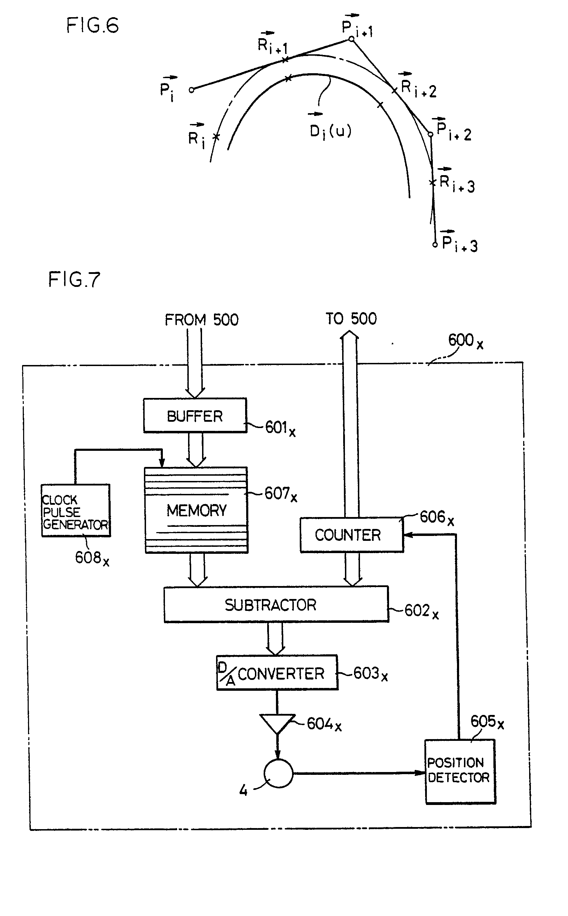

Generally such positioning apparatuses employ a feedback loop. A response characteristic of such driving system involves a time lag of higher order as shown by the solid line in Fig. 5. For the purpose set forth in the following, such characteristic is assumed to be similar to the time lag T of first order and the dead time $\tau$ is as shown by the dotted line in Fig. 5 for simplicity. These values are determined so that the error may be minimized by actual measurement by the apparatuses or simulation, for example, the area of the hatched portion in Fig. 5 may be minimized, or determined by the method of least squares.

Assuming that the input is $X_{(s)}$ and the output is $Y_{(s)}$, then the transfer function $G_{(s)}$ of the driving system assumed to be similar may be expressed by the following equation:

$$G_{(s)} = \frac{Y_{(s)}}{X_{(s)}} = \frac{e^{-\tau s}}{1 + Ts}. \tag{1}$$

By evaluating the input $X_{(s)}$ by the equation (1), $X_{(s)} \cdot e^{-\tau s} = Y_{(s)}(1 + Ts)$ is obtained. By converting this to a real time system, the following equation is obtained:

$$X_{(t-\tau)} = y_{(t)} + T \cdot \left(\frac{dy_{(t)}}{dt}\right) \tag{2}$$

Thus it follows that if a desired output $y_{(t)}$ is expressed by some formula, conversely

$$Y_{(t)} + T \times \left(\frac{dy_{(t)}}{dt}\right)$$

may be inputted with the time advanced by the dead time $\tau$. The detail thereof will be described subsequently.

On the other hand, it is necessary to obtain a formula for smoothingly connecting the respective taught points.

Fig. 6 is a view for depicting a method for smoothly connecting the path. Referring to Fig. 6, it is assumed that the position coordinates of the respective taught points are a vector representation $\vec{R}_i$ (i; 1 to n). Now a curved line portion is represented as $\vec{D}_{i,n}(u)$ using the vector representation, where the first subscript i denotes the i-th connecting element and the second subscript n denotes a curved line portion formed at the n-th portion, u being a parameter which is changeable between 0 and 1.

With the above described convention, assuming that $\vec{D}_{i,n}(u)$ is a locus of a pseudo gravity point when u is moved with a division of a weight $\omega(\tau)$ with respect to the curved line components $\vec{D}_{i,n-1}(u)$ and $\vec{D}_{i+1,n-1}(u)$, $\vec{D}_{i,n}(u)$ may be expressed by the following equation (3):

$$\vec{D}_{i,\,n}(u) = \{\int_u^1 \omega(\tau)\, \vec{D}_{i,n-1(\tau)} d\tau$$

$$+ \int_0^u \omega(\tau)\, \vec{D}_{i+1,n-1(\tau)} d\tau\} \tag{3}$$

$$\div \{\int_u^1 \omega(\tau) d\tau + \int_0^u \omega(\tau) d\tau\}.$$

Assuming that $\omega(u)$ meets $\int_0^1 \omega(\tau) d\tau = 1$ and further assuming the first taught point to be $\vec{R}_i$, and further assuming that the curved line portion at the 0-th portion may be expressed by the following equation:

$$\vec{D}_{i,\,0}(u) = \vec{R}_i \cdot f_{0,0}(u) \quad f_{0,0}(u) = 1 \tag{4}$$

then the curved line portion of the first section may be expressed by the following equation (5):

$$\vec{D}_{i,1}(u) = \vec{R}_i \cdot f_{0,1}(u) + \vec{R}_{i+1} \cdot f_{1,1}(u) \tag{5}$$

where

$$f_{0,1}(u) = \int_u^1 \omega(\tau) d\tau = 1 - u$$

$$f_{1,1}(u) = \int_0^u \omega(\tau) d\tau = u$$

Likewise, the curved line portion of the n-th section may be expressed by the following equation (6):

$$\vec{D}_{i,n}(u)= \sum_{j=0}^{n} \vec{R}_{i+j} \cdot f_{j,n}(u) \tag{6}$$

Since attention has been paid to the formula of the curved line portion at the third section, by expressing the same using u as a parameter, the following equation (7) is obtained:

$$\vec{D}_{i,3}(u)=\vec{R}_i \cdot f_{0,3}(u)+\vec{R}_{i+1} \cdot f_{1,3}(u)+\vec{R}_{i+2} \cdot f_{2,3}(u)+\vec{R}_{i+3} \cdot f_{3,3}(u) \tag{7}$$

where

$$f_{0,3}=\frac{(1-3u\times3u^2-u^3)}{6}$$

$$f_{1,3}=\frac{(4-6u^2+3u^3)}{6}$$

$$f_{2,3}=\frac{(1+3u+3u^2-3u^3)}{6}$$

$$f_{3,3}=\frac{u^3}{6}$$

where $0\leqq u\leqq1$.

Now referring to the above described equation (7), the curved line portion was obtained from the $\vec{R}_i$ point; however, this curved line does not pass through the point $\vec{R}_i$, as shown in Fig. 6. As a matter of practice, what is required is a formula of a curved line which passes through the taught points and is sufficiently smooth. In order to achieve such processing, conversely the reference point $\vec{P}_i$ on calculation may be evaluated from the taught point $\vec{R}_i$, whereupon the value of the reference point $\vec{P}_i$ may be substituted.

For the purpose of evaluating the reference point $\vec{P}_i$, considering a case of u=0 in the above described equation (7), then the following equation is obtained:

$$6 \cdot \vec{P}_i=\vec{R}_i+4 \cdot \vec{R}_{i+1}+\vec{R}_{i+2} \tag{8}$$

Thus by solving simultaneous equations concerning i, $\{\vec{P}_i\}$ is obtained from $\{\vec{R}_i\}$; however, since an error caused on $\vec{P}_i$ by $\{\vec{R}_i\}$ at a remote point is minor as a matter of practice, it would be sufficient to consider the taught point $\vec{R}_i$ at approximately nine preceding and succeeding points with respect to the reference point $\vec{P}_i$. An approximate solution of the simultaneous equations at that time would be:

$$\vec{P}_i=\sqrt{3}\{\vec{R}_i+ \sum_{j=1}^{9} (\vec{R}_{i+j}+\vec{R}_{i-j})a^j\} \tag{9}$$

where $a=\sqrt{3}-2$

Referring to the equation (9), $\vec{P}_i$ is evaluated by calculating this in succession with respect to i=1 to n. However, as for a vector $\vec{R}_{i\pm j}$ outside the boundary where nothing has been taught, appropriate values are substituted by substituting the points on the extension of the taught points. Now the formula of the path for $\vec{D}_{i(u)}$ of a sufficient smooth connection of the respective portions extending through the points $\vec{P}_i$ to the point $\vec{R}_i$ evaluated by the previously described equation (9) may be expressed by the following equation (10):

$$\vec{D}_i(u)=f_0\times\vec{P}_i+f_1\times\vec{P}_{i+1}+f_2\times\vec{P}_{i+2}+f_3\times\vec{P}_{i+3} \tag{10}$$

where

$$f_0=\frac{1-3u+3u^2-u^3}{6}$$

$$f_1=\frac{4-6u^2+3u^3}{6}$$

# 0 042 202

$$f_2 = \frac{1+3u+3u^2-3u^3}{6}$$

$$f_3 = \frac{u^3}{6}$$

$$0 \leqq u \leqq 1$$

Meanwhile, such formula for a path is well-known in various papers for a computer-aided design.

Meanwhile, referring to the above described equation (10), even if the value of $\vec{D}_i(u)$ is evaluated by substituting u at predetermined intervals between $0 \leqq u \leqq 1$, there is no guarantee that the moving distances on the path becomes equidistant and therefore the same is extremely inconvenient when the speed and the position are controlled only with a position command as shown in the above described equation (2). Accordingly, in the embodiment shown a new variable t is used in place of u and the following conversion is made:

$$u = at^3 + bt^2 + ct \qquad (11)$$

By determining the variable t at equidistant intervals, then the commanded positions on the path also become equidistant intervals. The above described equation (10) is thus deformed. Therefore, a, b and c are determined so that

$$\frac{d\vec{D}}{dt}$$

may be a desired value $V_c$ at the three points 0, $\frac{1}{2}$ and 1 during a period of u. The values of the variable t when u is 0, $\frac{1}{2}$ and 1 are assumed to be $t_0$, $t_1$ and $t_2$, respectively, and the values of

$$\frac{d\vec{D}}{du}$$

are accordingly assumed to be $V_0$, $V_1$ and $V_2$, respectively, then from the above described equation (11):

$$\left. \begin{array}{l} 0 = at_0^3 + bt_0^2 + ct_0 \\[4pt] \frac{1}{2} = at_1^3 + bt_1^2 + ct_1 \\[4pt] 1 = at_2^3 + bt_1^2 + ct_2 \end{array} \right\} \qquad (12)$$

On the other hand, from the above described equation (10) the following equation (13) is obtained:

$$\frac{d\vec{D}}{du} = \frac{1}{2}\{(\vec{P}_{i+3} - 3\vec{P}_{i+2} + 3\vec{P}_{i+1} - \vec{P}_i) \times u^2$$

$$+ (2\vec{P}_{i+2} - 4\vec{P}_{i+1} + 2\vec{P}_i) \times u + (\vec{P}_{i+2} - \vec{P}_i)\} \qquad (13)$$

By substituting the value of u in the equation (13), the following is obtained:

$$\left. \begin{array}{l} \vec{V}_0 = \dfrac{\vec{P}_2 - \vec{P}_0}{2} \\[12pt] \vec{V}_1 = \dfrac{\vec{P}_{i+3} + 5\vec{P}_{i+2} - 5\vec{P}_{i+1} - \vec{P}_i}{8} \\[12pt] \vec{V}_2 = \dfrac{\vec{P}_{i+3} - \vec{P}_i}{2} \end{array} \right\} \qquad (14)$$

8

From the above described equation (14) and the following equation (15), the equation (16) is obtained:

$$\frac{d\vec{D}}{dt} = \frac{d\vec{D}}{du} \cdot \frac{du}{dt}$$

$$\frac{d\vec{D}}{dt} = \frac{d\vec{D}}{du} \cdot (3at^2 + 2bt + c) \qquad (15)$$

$$V_c = \vec{V_0} \times (3at_0^2 + 2bt_0 + c)$$

$$V_c = \vec{V_1} \times (3at_1^2 + 2bt_1 + c) \qquad (16)$$

$$V_c = \vec{V_2} \times (3at_2^2 + 2bt_2 + c)$$

By determining the coefficients a, b and c satisfying the above described equations (12) and (16) by using a convergence operation, for example, the formula for a path in a desired form is obtained by the following equation (17):

$$\vec{D}_{(t)} = \frac{1}{6.0}\{(\vec{P}_{i+3} - 3\vec{P}_{i+2} + 3\vec{P}_{i+1} - \vec{P}_i)(at^3 + bt^2 + ct)^3$$

$$+ (3\vec{P}_{i+2} - 6\vec{P}_{i+1} + 3\vec{P}_i)(at^3 + bt^2 + ct)^2$$

$$+ (3\vec{P}_{i+2} - 3\vec{P}_i)(at^3 + bt^2 + ct)$$

$$+ (\vec{P}_{i+2} + 4 \cdot \vec{P}_{i+1} + \vec{P}_i)$$

$$\frac{d\vec{D}_{(t)}}{dt} = \frac{1}{2.0}\{(\vec{P}_{i+3} - 3\vec{P}_{i+2} + 3\vec{P}_{i+1} - \vec{P}_i)(at^3 + bt^2 + ct)^2$$

$$+ (2\vec{P}_{i+2} - 4\vec{P}_{i+1} + 2\vec{P}_i)(at^3 + bt^2 + ct)$$

$$+ (\vec{P}_{i+2} - \vec{P}_i)\}(3at^2 + 2bt + c) \qquad (17)$$

As is seen from the equation (17), by allotting the intervals of an appropriate time period t and making calculation of the above described equation (17) based on the time intervals for renewing the commanded values and the speed $V_c$ on the desired path and by substituting the same in the above described equation (2), the commanded values with the time lag of first order of the driving system considered can be calculated.

Fig. 7 shows one example of a positioning apparatus adapted for processing the dead time. In Fig. 7 as well, only the X axis positioning apparatus $600_x$ is shown as representing the respective axis positioning apparatuses. It is pointed out that the positioning apparatus shown is different from that shown in Fig. 4 in the following respects. More specifically, the Fig. 7 positioning apparatus is provided with a memory $607_x$ and a clock pulse generator $608_x$ provided associated therewith. The clock pulse generator $608_x$ is structured to generate a clock pulse of a repetition frequency with which the dead time $\tau$ can be fully counted (say a period of 1 ms). On the other hand, the memory $607_x$ is structured to comprise storing regions of the number (say 100) obtained by dividing the time period $(\tau_0 - \tau_x;$ say 100 ms) by the period of the above described clock pulse, where $\tau_0$ is a reference dead time and $\tau_x$ is a dead time of the X axis driving system. Furthermore, the memory $607_x$ is adapted such that the content is shifted to a lower stage on a one stage by one stage basis in succession as a function of the clock pulse obtained from the clock pulse generator $608_x$ and the content in the lowermost stage is applied as an input to the subtractor $602_x$. The uppermost stage of the memory $607_x$ is loaded with the content of the buffer $601_x$ as a function of the clock pulse.

By adopting such circuit as shown in Fig. 7 as the positioning apparatuses of the respective axes, it follows that when the commanded position information of the respective axes is obtained simultaneously from the computer 400 the respective axis driving systems are supplied with the corrected commanded positions with a time delay of a difference from the difference dead time $\tau_0$, with the result that positioning can be achieved with respect to the respective axes in consideration of the dead time of the respective axes.

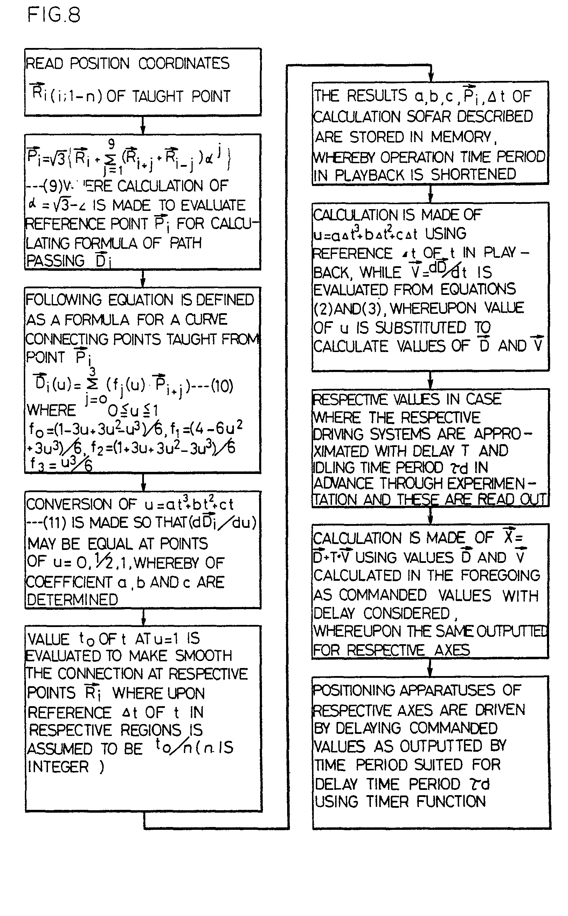

Meanwhile, Fig. 8 is a flow diagram showing such operation. The above described operation would be better appreciated with reference to Fig. 8.

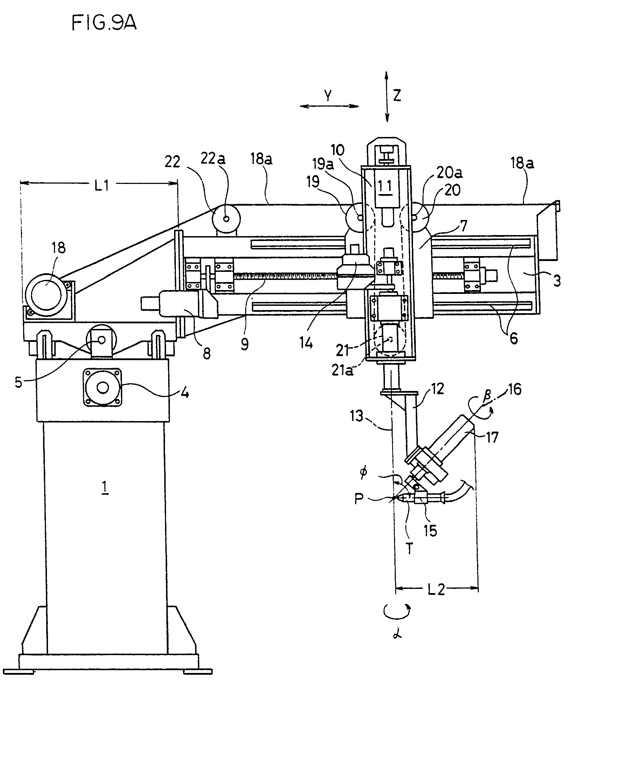

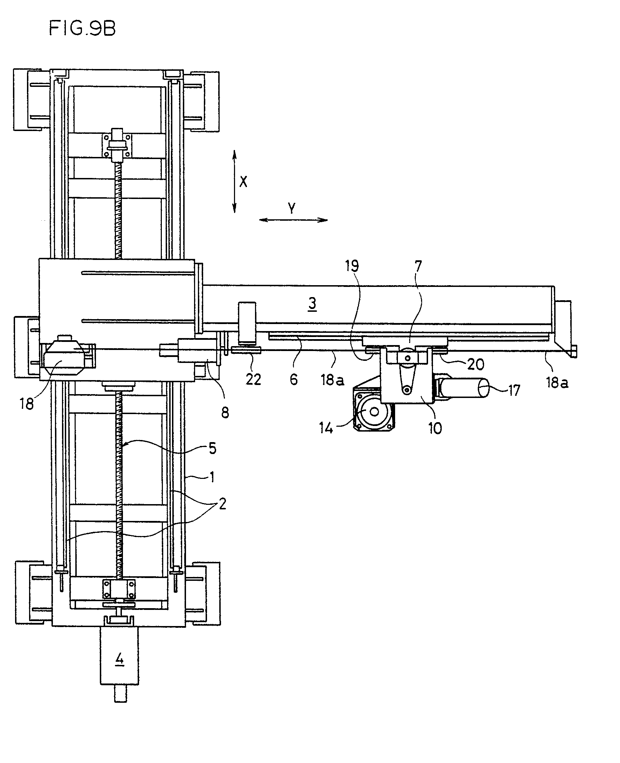

Fig. 9A is a side view showing another example of an automatic cutting apparatus wherein the present

9

invention can be advantageously employed and Fig. 9B is a plan view of the Fig. 9A embodiment. The automatic cutting robot shown comprises a base 1 extending in the horizontal direction, i.e. the X axis direction and two rails 2 and 2 are provided on the base 1 extending in the X axis direction. An arm 3 is supported on the rails 2 so as to be movable in the X axis direction. A motor 4 is provided on the side of the base 1 extending in the X axis direction, so that the arm 3 is controllably moved in the X axis direction through a well-known power transmitting mechanism (a ball screw) 5. Two rails 6 and 6 are provided on the side surface of the arm 3 so as to extend in the Y axis direction. A moving member 7 is supported on the rails 6 so as to be movable in the Y axis direction. The moving member 7 is controllably moved in the Y axis direction through a power transmitting mechanism (a ball screw) 9 by means of a motor 8 provided on the arm 3. A column 10 is supported on the moving member 7 so as to be movable in the Z axis direction. The column 10 is controllably moved in the Z axis direction through a power transmitting mechanism (not shown) by means of a motor 11 provided at the top thereof. A rotating member 12 is supported at the lower end of the column 10, so that the rotating member 12 is controllably rotated about the α axis by means of a motor 14 provided on the column 10. A fixture 15 for holding a torch T is supported at the free end of the rotating member 12. The torch fixture is provided to be rotatable about the β axis 16 which is an axis inclined by 45° with respect to the α axis 13, so that the same is controllably rotated about the β axis by means of a motor 17 mounted on the rotating member 12. Meanwhile, the torch T is held in an attitude inclined by say 45° with respect to the β axis 16. These two axes 13 and 16 are disposed to intersect at the point P, so that the point P may coincide with the cutting point of the torch T. By positioning the working point P of the torch T on the above described two axes 13 and 16, the inventive automatic position controlling apparatus is particularly effective when the same is practiced as a cutting apparatus. More specifically, such cutting apparatus need be of a high speed movement type rather than of a low speed movement type of such as a conventional welding apparatus. If the working point P of the torch T had not been provided on these rotation axes 13 and 16, it could have happened that a movement of the column 10 in the X axis or Y axis direction need be of a very high speed with respect to the movement of the working point P, with the result that an increase of inertia could have been caused. Therefore, according to the embodiment, the working point P of the torch T is positioned on the above described two rotation axes 13 and 16.

A well-known spring balancer 18 is provided at one end of the arm 3. The spring balancer 18 comprises an extending member (wire) 18a extending along the arm 3. A first and second pulleys are provided so as to be rotatably supported by the shafts 19a and 20a, respectively, at both ends in the width direction at the top of the moving member 7. A third pulley 21 is provided to be supported rotatably by a shaft 21a at the lower portion of the column 10. An auxiliary pulley 22 is further provided to be supported rotatably by a shaft 22a at the position above the arm 3 and closer to the balancer 18 than the moving member 7. The extending member 18 is fixed at the end thereof to the other end portion of the arm 3 and is entrained in succession about the pulleys 22, 19, 21 and 20 from the side of the balancer 18. The winding force of the extending member 18a of the spring balancer 18 has been set to be approximately a half of the total weight of the column 10 and the respective components supported thereby, such as the rotating member 12, the torch fixture 15 and the torch 10.

In the cutting robot as shown in Figs. 1 and 2, a workpiece (not shown) is fixed to a flat table (not shown) and the respective motors 4, 8, 11, 14 and 17 are controlled, so that the torch T is maintained in an attitude most suited to a workpiece and a cutting point, i.e. a point P is brought along a cutting line of a workpiece, whereby a workpiece can be cut. At that time the total weight of the column 10 and the respective components supported thereby and the winding force of the spring balancer 18 have been substantially balanced without regard to the wound amount of the extending member 18a and, therefore, the load acting on the motor 11 for moving the column 10 upward and downward (in the Z axis direction) is very little changed in either case of the upward movement and the downward movement. Accordingly, the motor 11 may be small sized. Furthermore, the arm 3 is formed integrally with the carriage movable in the X axis direction on the base 1 so as to long extend in the Y axis direction and the moving member 7 is supported on the arm 3 so as to be movable in the Y axis direction. Therefore, as compared with a structure in which the arm 3 is adapted to be movable in the Y axis direction with respect to the carriage moving in the X axis direction on the base 1 and the moving member 7 is made integral with the end portion of the arm 3, the weight of the arm may be small and accordingly inertia of the arm 3 on the occasion of a moving operation in the X axis direction can be decreased. Furthermore, inertia of the moving member 7 on the occasion of a moving operation on the Y axis direction is also small. Furthermore, since the arm 3 is adapted to be supported on the base 1 at one end, the total of the length L1 of the portion for supporting the arm 3 on the base 1 and the maximum radius L2 of the rotating member 12 and the torch fixture 15 with the same rotating about the axis 13 is relatively short, as compared with a case where both ends are supported, and accordingly the weight of the arm 3 can be further decreased. Therefore, even in the case where the accelerating speed of the torch T is large, inertia of the arm 3 on the occasion of a moving operation in the X axis direction can be further decreased and hence an influence of the inertia exerted upon the position accuracy can be minimized.

The cutting robot shown in Figs. 9a and 9b has five degrees of freedom of X, Y, Z, α and β and is additionally provided with the driving systems for position control and a control means such as a computer and an operation table. The operation table 300 may be of the same type as shown in Fig. 3; however, the embodiment shown employs the structure to be described in the following. Furthermore, the embodiment shown is structured to comprise the respective axis positioning apparatuses (corresponding to the above described five axes), as shown previously in Fig. 4 or 7.

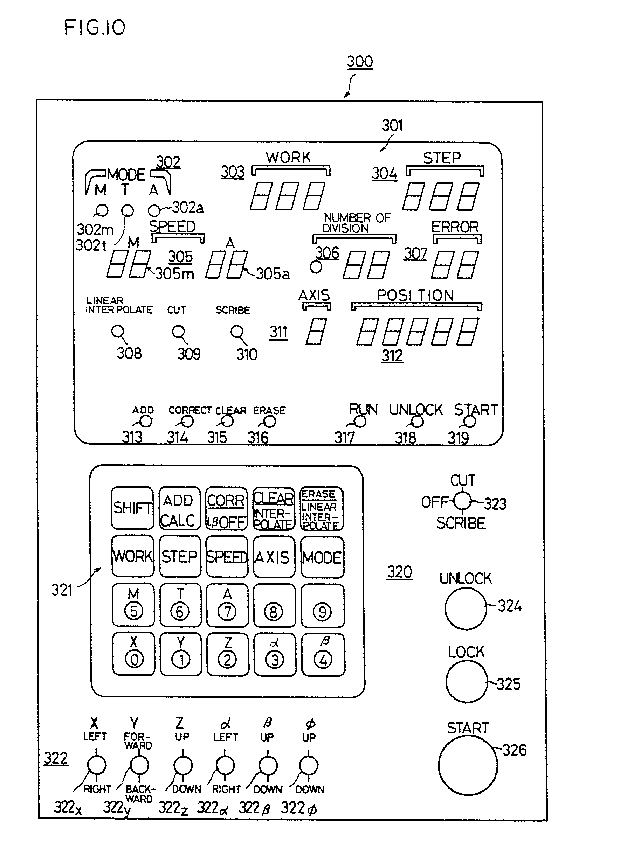

In the embodiment shown, the operation table 300 comprises an operation portion 320 and a display portion 301, as shown in Fig. 10. The operation portion 320 is aimed to enable manual operations of cutting robot shown in Figs. 9A and 9B through operation of the key switches. Accordingly, a user program can be taught or entered through operation of the operation table 300. The operation portion 320 comprises a keyboard 321. The keyboard 321 comprises a several key switches including ten keys. The "SHIFT" key of the keyboard 321 is aimed to select the function with respect to the key switches wherein the functions thereof are indicated on the key top in two rows, so that when the "SHIFT" key is operated the function indicated on the upper row may be selected. The operation portion 320 further comprises manual operation switches 322 for use in a manual mode (teaching mode). These manual operation switches 322 include switches $322_x$, $322_y$, $322_z$, $322_\alpha$, $322_\beta$ and $322_\phi$ for the respective axes X, Y, Z, α, β and φ shown in Figs. 9A and 9B. Although not shown in detail, these manual operation switches $322_x$ to $322\phi$ may be of a toggle switch that can assume say three positions, as in the case of the switches $334_x$ to $334_\beta$ shown previously in Fig. 3. The switches $322_x$, $322_y$ and $322_z$ serve to move the torch T in the direction away from the original point of the respective axes along the respective corresponding controlling axes when the same are turned upward and to move the torch in the direction toward the origin point when the same are turned downward. The switches $322_\alpha$, $322_\beta$ and $322_\phi$ serve to cause rotation in the clockwise direction about the corresponding axes when the same are turned upward and contrary to cause rotation in the counterclockwise direction when the same are turned downward. The operation portion 320 further comprises a selection switch 323, so that the selection switch 323 may select the operation of "CUTTING", "OFF" or "SCRIBING" through selection thereof. The switch 324 is aimed to release the state as locked by the switch 325. The start switch 326 provides a start command on the occasion of an automatic mode and also provides a teaching command on the occasion of a manual mode. Accordingly, if and when the start switch 326 is operated in the manual mode, the position information of the respective axes at that time is loaded in the random access memory 404 included in the computer 400.

The display portion 301 comprises a mode display lamp 302, which includes lamps $302_m$, $302_t$ and $302_a$. The respective lamps $302_m$, $302_t$ and $302_a$ are aimed to display the manual mode (M), the test mode (T) and the automatic mode (A), respectively. For example, if and when the "MODE" key is operated and then the "SHIFT" key is operated and then the "M/⑤" key, the "T/⑥" key or the A/⑦" key is further operated in the keyboard 321, then accordingly the lamp $302_m$, $302_t$ or $302_a$ is driven for display, whereby the manual mode, the test mode or the automatic mode is displayed as set. The work number display 303 comprises a numerical value display of three digits, for example, for displaying the number of a workpiece. By operating the "WORK" key and then by operating the ten keys thereafter in the keyboard 321, the number of the workpiece at that time is set and the computer reads the corresponding user program. The step number display 304 comprises a numerical value display of three digits, for example, for displaying the number of program steps. On the occasion of the manual mode or the teaching mode, the number of teaching steps is displayed by the step number display 304. Therefore, an operator checks whether the number of programmable steps say "400" has been exceeded by looking at the display 304. In the test mode the step number display 304 displays the number of program steps designated by the ten keys operated after operation of the "STEP". At that time the program step as displayed is read out. The speed display 305 comprises a display $305_m$ on the occasion of the manual mode and a display $305_a$ on the occasion of the automatic mode. More specifically, the embodiment shown has been adapted such that the speed can be changed in the manual mode or the automatic mode. In the manual mode the speed on the occasion of the manual mode is set only through operation of the ten keys and the same is displayed by the display $305_m$. On the other hand, the speed on the occasion of the automatic mode is set by operating the "SPEED" key and then by operating the ten keys in the keyboard 321. Then the speed of execution as desired in the automatic mode is set and the same is displayed by the display $305_a$. Meanwhile, necessity of operating the "SPEED" key has been eliminated on the occasion of the manual mode, because such speed is more often set on the occasion of the manual mode as compared with the automatic mode.

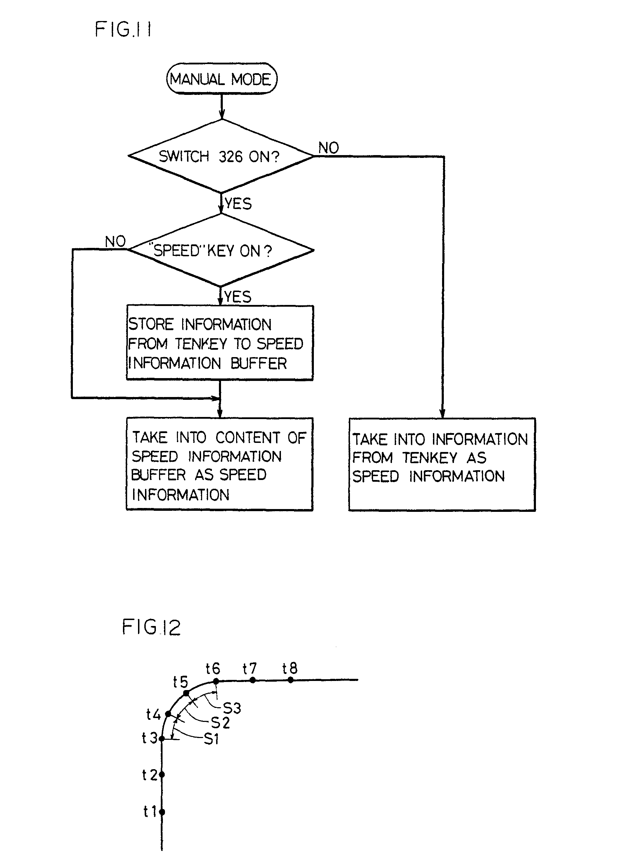

Now setting of the speed information will be described in brief. Since in a conventional robot the speed information has always been rendered effective, the same was effective even when the same is controlled by the manual operation switches with respect to the respective axes and also when the teaching switch is operated, i.e. the same is taught. On the other hand, in a conventional welding robot, for example, since there was little difference between the speed of movement through manual operation and the speed of actual movement in the automatic mode after teaching, there was no problem even when the speed information is always effective as described above. However, in a cutting robot where the present invention is employed, it is necessary to cause movement in the automatic mode faster, say 50 mm/sec, than in the manual mode (say 1 mm/sec) and, therefore, in the case where the speed information is always rendered effective as in the prior art, it is necessary to change the setting of the speed information between in the case of movement through the manual operation and in the case of the teaching, i.e. in the case of operation of the teaching switch, which makes tiresome the operation. Furthermore, when the manual operation is made at the speed set on the occasion of the teaching, the movement is too quick and a disadvantage is caused that the torch could interfere with other member, could collide with the workpiece, and the like. Therefore, the embodiment shown is adapted such that the speed information for the automatic mode and the speed information for the manual mode can be separately set. Then, when the teaching switch, i.e. the start switch 326 is operated in the manual mode, it is determined whether the "SPEED" key has been operated in the keyboard 321. If it is determined that the "SPEED" key has been operated, the speed information entered through the operation of the ten keys following the above described key is stored in the speed information buffer (which is included in the random access memory 404 but is not shown). The data stored in the above described speed information buffer is loaded as the speed information at that time. If and when the "SPEED" key has not been operated when the switch 326 is operated, the information previously stored in the speed information buffer is loaded at that time as the taught speed information at that time. On the other hand, on the occasion of manual operation, the speed information can be provided only through the operation of ten keys, without operating the "SPEED" key. The above described operation is shown in Fig. 11. By doing so, the speed information which is different between on the occasion of the manual operation and on the occasion of teaching can be set with ease. Accordingly, the above described problems can be all eliminated.

The display portion 301 further comprises the interpolation (division) number display 306. For example, by operating the "CLEAR/INTERPOLATE" key in the keyboard 321, the interpolation positions between the start point and the end point when the same are determined can be taught. Such number of division is displayed by the display 306. When an error occurs, the error display 307 displays the kind thereof by the numerical value code in advance set. The display 301 is further provided with the displays 308, 309 and 310 and these displays 308 to 310 each comprise a display lamp. The display lamp 308 is driven for display responsive to setting of the linear interpolation responsive to the operation of the "ERASE/LINEAR INTERPOLATE" key included in the keyboard 321. More specifically, the "ERASE/LINEAR INTERPOLATE" key is aimed to force the linear interpolation between given two points (as to be described subsequently). Furthermore, the displays 309 and 310 are driven for display responsive to selection of the selection switch 323, thereby to display either of the cutting operation and the scribing operation. The axis display 311 comprises a numerical value display of one digit and displays the respective axes by a numerical value. More specifically, when the "AXIS" key is operated and thereafter the "SHIFT" key is operated and thereafter the "Y/①" key is operated, for example, in the keyboard 321, then the Y axis is designated and the numerical value "1" is displayed by the display 311. Meanwhile, the numerical values "0", "2", "3" and "4" are displayed with respect to the remaining axes X, Z, α and β, respectively. The position display 312 comprises a numerical value display of five digits, for example, and is aimed to display the distance from the origin point or the angle with respect to the axis designated as described above and thus displayed with the unit mm (millimeter) or the unit deg (degree). The display lamps 313, 314, 315 and 316 are driven for display when the "SHIFT" key is operated and thereafter the "ADDITION/CALCULATION" key, the "CORRECTION/αβOFF" key, the "CLEAR/INTERPOLATION" key and the "ERASE/LINEAR INTERPOLATE" key are operated in the keyboard 321. More specifically, in additionally correcting, clearing or erasing the program through operation of these keys, these displays 313, 314, 315 and 316 display the same. The display 317 displays that the computer is on calculation. Since calculation of the embodiment shown is relatively complicated, the computer being in operation is in advance taught. Accordingly, the lamp 317 is driven for display when the mode of being in calculation as taught in advance is being carried out. The displays 318 and 319 are driven for display responsive to the operation of the switches 324 and 236, respectively.

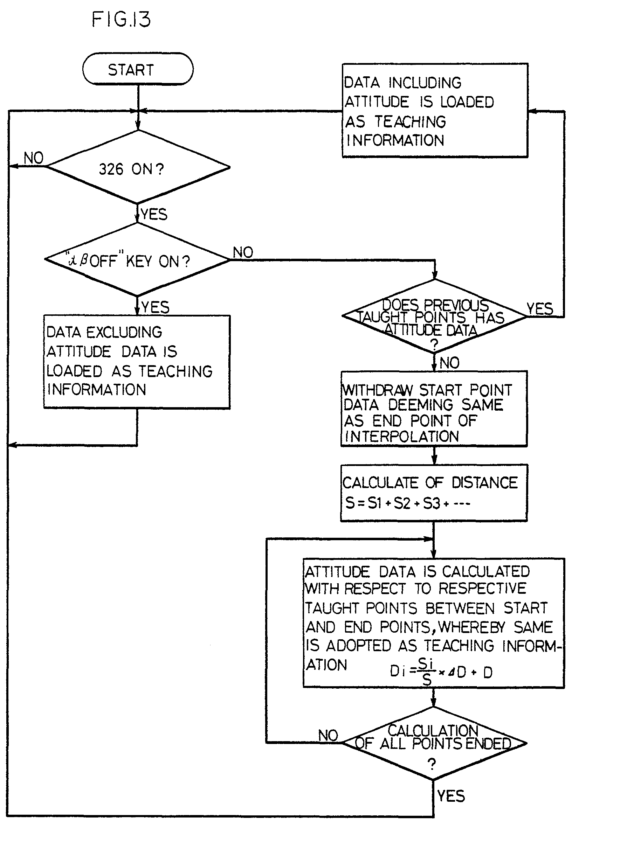

Now before entering into a detailed description of the embodiment shown, the "CORRECTION/αβOFF" key in the keyboard 321 will be briefly described with reference to Figs. 12 and 13. Generally, the teaching operation is performed by controlling in the manual mode the positions of the five axes X, Y, Z, α and β and by operating the start switch 326, whereby the positions and the attitudes of the respective axes at that time point are taught. However, most of the workpieces are of geometry for which the torch T seldom takes largely different attitudes at the respective points, which makes it possible to complete the operation by simply changing the attitudes in a linear manner. Therefore, in teaching the attitudes, only the start and end points are taught between a given point and another given point, while the remaining points between the start point and the end point are evaluated by an interpolating operation performed by a computer without teaching the attitude data. By way of an example, consider a case where a cutting line as shown in Fig. 12 is to be taught. In such a case, the points being taught t1 to t3 and t6 to t8 are taught, including the position data and the attitude data, as in the case of the usual teaching. In teaching the points being taught t4 and t5, the "CORRECTION/αβOFF" key is operated, so that nothing is taught as for these axes α and β. More specifically, as for these points being taught t4 and t5, only the position data is taught. Then the computer is adapted to evaluate the respective distances S1, S2 and S3 based on the position data of the start point (t3) and the end point (t6). Then as for the attitude data of the points being taught t4 and t5, proportional division between the start point t3 and end point t6 is calculated in accordance with the following formula:

$$\vec{R}_{t4}=\frac{(\vec{R}_{t6}-\vec{R}_{t3})\times S1}{S1+S2+S3}+\vec{R}_{t3}$$

$$\vec{R}_{t5}=\frac{(\vec{R}_{t6}-\vec{R}_{t3})\times(S1+S2)}{S1+S2+S3}+\vec{R}_{t3}$$

In accordance with the above described foi mula the data of the respective axes $\alpha$ and $\beta$ is evaluated. As a result, the teaching accuracy can be enhanced and the teaching time period can be shortened.

Now another approach for evaluating a formula for connecting smoothly the respective points being taught will be described with reference to Fig. 6 depicted previously. This other approach is proposed upon notice by the present inventors that the above described approach is inconvenient depending on the situation when the same is actually practiced. Meanwhile, the previously described equations (3) to (10) are incorporated in the description of this other approach.

Meanwhile, the previously described equation (10) was shown for a computer aided design method and therefore as such can not be applied to a control of a point-to-point type robot as a matter of course. Therefore, a consideration set forth in the following was added by the present inventors.

More specifically, it is first noted that the above described variable u is not a time but a parameter which is changeable from "0" to "1" without regard to a moving distance frmm the point i to the point i+1. Then the following consideration.is given for the purpose of moving a member being controlled along the above described path at a constant speed.

Assuming the moving distance from the point i to the point i+1 to be S, the same may be expressed by the following equation (18):

$$S=\int_0^1 \left| \frac{d}{du}\vec{R}_{i,3}(u) \right| du \qquad (18)$$

Assuming further that a system is employed in which a command value is renewed at each appropriate interval or time interval with respect to the moving speed and the path, and the number of commands for movement of the distance S is M, then the same is expressed by the following equation (19):

$$M=[S/\Delta S] \qquad (19)$$

where the symbol [ ] means expression by an integer.

By equally dividing the movement between these points by the number M with respect to the parameter u, the m-th parameter may be expressed by the following equation (12):

$$u_m=\frac{m}{M} \qquad (20)$$

where m=1 to M. The moving distance between the parameters $u_{m-1}$ and $u_m$ is expressed by the following equation (21):

$$S'_m=\int_{u_{m-1}}^{u_m} \left| \frac{d}{du}\vec{R}_{i,3}(u) \right| du \qquad (21)$$

If and when it can be assumed that the division number M is sufficiently large, the above described equation (21) is modified as the following equation (22):

$$S'_m= \left| \frac{d}{du}\vec{R}_{i,3}(u) \right| u=u_m/M \qquad (22)$$

Accordingly, assuming that the timing tm for giving a new command can be set in a timer, the timing tm is expressed by the following equation (23):

$$tm=S'_m/V \qquad (23)$$

where V denotes a commanded moving speed. A new commanded value is commanded in accordance with such timing tm.

Meanwhile, since an integration for evaluating the above described distance S does not require so

13

much accuracy with respect to the speed as compared with the accuracy of the position, numerical value integration may be made at appropriate rough intervals.

By making control in the above described manner, it is possible to make movement at a constant speed on a smooth path passing the points taught; however, as the movement becomes a high speed a delay in following in a control system becomes hardly negligible. In the following, therefore this will be considered.

Assuming that the commanded value given to the servo system is $\vec{Y}(t)$ and the movement of the member between controlled is $\vec{R}(t)$, then a dependency relation exists between the loop gain, inertia and the like of the servo system. It is assumed that the same is expressed in a model as shown in the following equation (24):

$$\vec{R}(s) = \frac{e^{-\tau s}}{1+\vec{T}S}\vec{Y}(s) \tag{24}$$

By expressing the foregoing by a time region, the following equation (25) is obtained:

$$\vec{Y}(t) = \vec{R}(t-\tau) + \vec{T}\frac{d}{dt}\vec{R}(t+\tau)$$

$$\frac{d}{du}\vec{R}(t) = \frac{d}{du}\vec{R}(t+\tau) \cdot \frac{du}{dt} \tag{25}$$

Accordingly, it is desired to cause the member being controlled to make movement of $\vec{R}(t)$, a command of $\vec{Y}(t)$ need be given. As described in the foregoing, a relation given by the following equations (26) and (27) exists among the moving amount S, the time period t and the parameter u:

$$S = \int_0^u \left| \frac{d}{du}\vec{R}(u) \right| du \tag{26}$$

$$t = \frac{1}{V}\int_0^u \left| \frac{d}{du}\vec{R}(u) \right| du \tag{27}$$

Accordingly, the following equations (28), (29) and (30) can be obtained:

$$\frac{du}{dt} = \frac{V}{\left| \frac{d}{du}\vec{R}(u) \right|} \tag{28}$$

$$\frac{d}{dt}\vec{R}(t) = \frac{d}{du}\vec{R}(u) \cdot \frac{du}{dt} = V \times \frac{\frac{d}{du}\vec{R}(u)}{\left| \frac{d}{du}\vec{R}(u) \right|} \tag{29}$$

$$\vec{Y}(t) = \left\{ \vec{R}(u) + \vec{T}V \times \frac{\frac{d}{du}\vec{R}(u)}{\left| \frac{d}{du}\vec{R}(u) \right|} \right\} t = t+\tau \tag{30}$$

where $\vec{R}$ and $d\vec{R}/du$ are given by the following equations (31) and (32):

$$\vec{R}_i(u) = \{(1-3u+3u^2-u^3)\vec{P}_i + (4-6u^2+3u^3)\vec{P}_{i+1} + (1+3u+3u^2-3u^3)\vec{P}_{i+2} + u^3\vec{P}_{i+3}\}/6 \tag{31}$$

$$\frac{d}{du}\vec{R}_i(u) = \{(-1+2u+u^2)\vec{P}_i + (-4u+3u^2)\vec{P}_{i+1} + (1+2u-3u^2)\vec{P}_{i+2} + u^2\vec{P}_{i+3}\}/2 \tag{32}$$

14

As described in the foregoing, a position control in consideration of a delay in a driving system can be achieved. Although in the foregoing theoretical developments were made using several equations, in actually making such control, optimum values are obtained by experimentation based on the above described equations and stored and then the same are read out, as shown in the flow diagram.

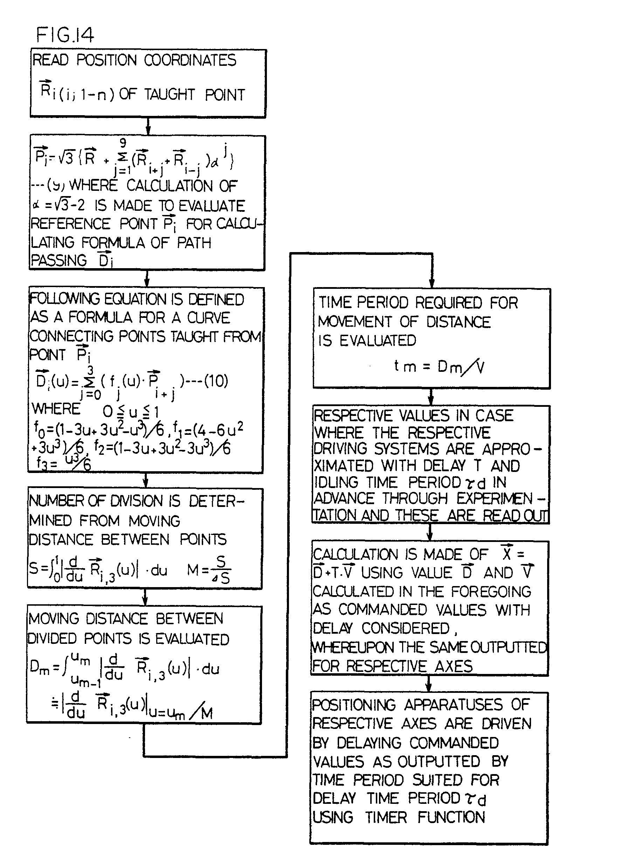

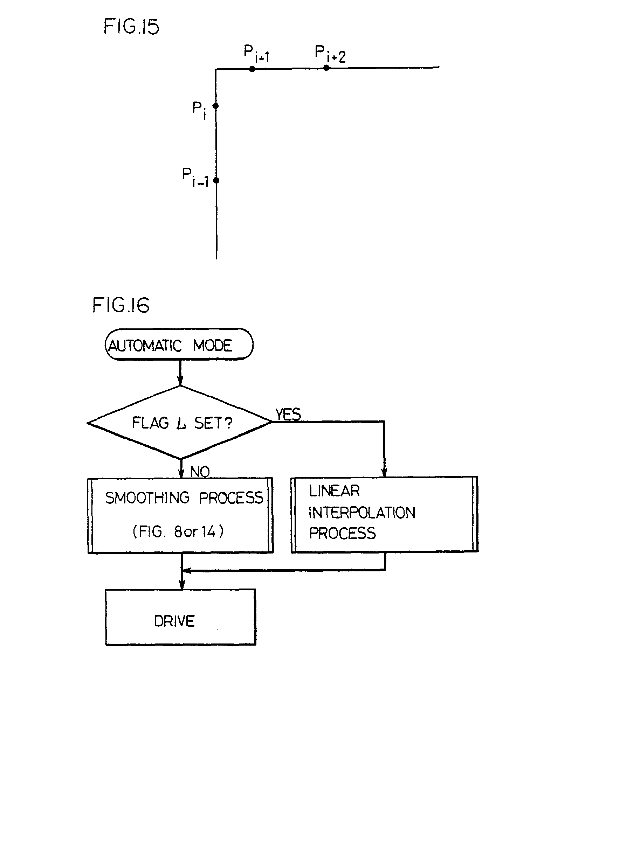

However, in teaching a cutting line as shown in Fig. 15, for example, a case could occur where a desired cutting line is not followed with fidelity between the points being taught $P_i$ and $P_{i+1}$, in particular, in making a position control as shown in Fig. 14. Therefore, in the embodiment shown, in teaching a cutting line as shown in Fig. 15, for example, an L flag as well as the position data of $P_i$ and $P_{i+1}$, for example, is set by operating the "LINEAR INTERPOLATION" key in the keyboard 321 (Fig. 10) for the purpose of making a control by a usual linear interpolation without making smoothing calculation between these two points. Then in reading the taught information in the automatic mode, the L flag is simultaneously read out to determine whether the L flag has been set. If the L flag has not been set, a smoothing calculation as shown in Fig. 8 or 14 described previously is made. Conversely, if the L flag has been set, then calculation of the linear interpolation is made with respect to these two points. As well known, the linear line interpolation is performed by the following equation (33):

$$\vec{P}_m = \vec{P}_i\left(\frac{M-m}{M}\right) + \vec{P}_{i+1}\frac{m}{M} \tag{33}$$

$$L = |\vec{P}_{i+1} - \vec{P}_i|$$

$$M = \frac{L}{\Delta L}(\Delta L = \Delta t \cdot V_c)$$

$$1 \leqq m \leqq M$$

According to the above described linear interpolation, a position control is made by the linear interpolation between the points being taught $P_i$ and $P_{i+1}$ in Fig. 15, for example, whereby a problem of an angle become dull is eliminated.

Meanwhile, the above described embodiment was described as embodied as a cutting robot of the rectangular coordinates. However, it is a matter of course that through more or less modification of Figs. 8 and 14 previously described the same can be equally applied to robots of the polar coordinates system, a multiple node system and other control system. Furthermore, although the above described embodiment was described as applied to that of 3-dimension, the same can also be equally applied to that 5-dimension.

In the following another embodiment will be described which is preferred in eliminating a problem occurring in practicing the above described automatic position control in an automatic cutting robot.

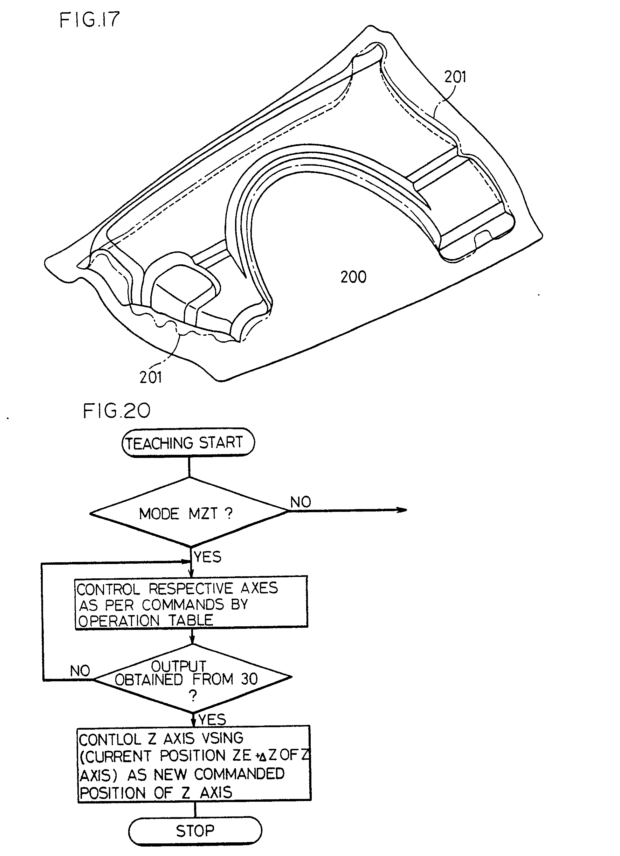

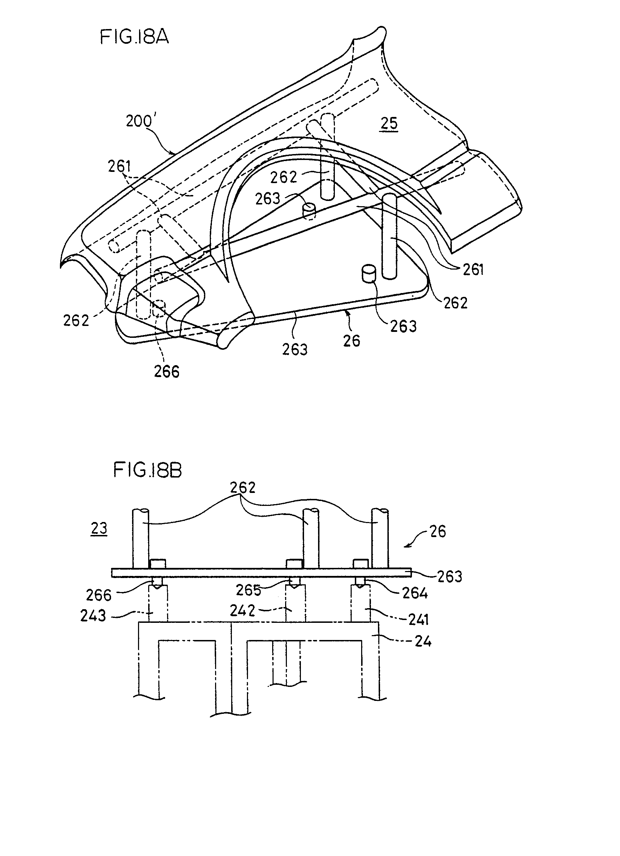

Referring to Figs. 17, 18A and 18B, the embodiment in description is directed to an apparatus for positioning a workpiece being press formed and is particularly aimed at an apparatus effectively positioning with accuracy a workpiece of a very thin plate which is readily flexible.

In automatically cutting or welding such workpiece as described above in a cutting robot or in a welding robot, a serious problem arises in positioning the above described workpiece. More specifically, since the workpiece is of such very thin plate, the workpiece is deformed when the same is fixed using conventional cramping means and as a result the workpiece can not be accurately positioned.

The embodiment now in description was implemented in consideration of the above described circumstances and is aimed to provide an apparatus for accurately positioning such workpiece. Now the embodiment will be described in detail in the following. Meanwhile, although the embodiment is described as embodied in an apparatus for positioning a workpiece being press formed in a cutting robot of a rectangular coordinate system, it is pointed out that the embodiment is not limited to the shown configuration embodied.

. According to the embodiment, an apparatus 23 for positioning a workpiece 200 (Fig. 17) comprises components 23, 24, 25 and 26. The component 23 is a supporting base for carrying a workpiece 200 being press formed, (in the embodiment shown the same is a portion of an automobile body of a very thin plate) and is fixed to the floor beneath an arm 3 (Figs. 9A and 9B). Meanwhile, three pipes 231, 232 and 233 are provided properly spaced apart from each other at the top of the base 23.

200' denotes a mold for the workpiece 200 being cut and press formed. The mold 200' of the embodiment shown has a concave surface on the upper side, on which a proper separating agent is coated and a time dependent setting material such as water setting material such as plaster, cement and the like is poured, whereupon a portion of a reinforcing material 26 (pipes 261, 261,...) is dipped into the poured material 25 and, after the material 25 is set, the same is separated from the workpiece 200. Three members 262 are provided to the pipe 261 so as to protrude to be exposed from the material 25. A flat plate 263 of an approximate triangle is fixed at the tip end of the member 262. Three protrusions 264, 265 and 266 are fixed to the flat plate 263 and these protrusions 264, 265 and 266 are fixed so as to be engageable with the pipes 241 to 243.

Now the operation of the embodiment shown will be described. First the mold 200' is borne on the base 24. More specifically, the protrusions 264 to 266 are mounted to the top of the pipes 241 to 243, so that the mold 200 is positioned with respect to the base 24. Furthermore the workpiece 200 is assuredly covered on the upper surface of the material 25 of the mold 200', so that the workpiece 200 is positioned. Since generally an automobile body has concave and convex portions, the convex and concave portions of the workpiece 200 are engaged with the concave and convex portions of the material 25, so that the workpiece 200 can be extremely accurately positioned, in spite of the fact that the same is of a very thin plate which is flexible. Then by the above described control apparatus, the torch T is maintained in an optimum attitude with respect to the workpiece 200 and therefore an automatic cutting operation can be performed while the cutting point P is moved along the cutting line 201 (shown by one dotted line in Fig. 17) of the workpiece 200.

Meanwhile, since the above described automobile body comprises a plurality of workpieces being press formed, a plurality of molds are in advance fabricated for the respective workpieces and the cutting programs are stored in the control apparatus for the respective workpieces. Then by simply changing the mold for each workpiece to place the same on the base 24 and by simply selecting the desired cutting program each time the kind of the workpiece being cut is to be changed, the above described workpieces of all the kinds can be automatically cut with ease.

In the foregoing the embodiment was merely described by way of example and in the case where the workpiece 200 is not to be worked by heat such as fusion cutting, the material 25 may be of resin. Furthermore, in the case where the workpiece 200 is too little concave or convex to be accurately positioned when the workpiece 200 is placed on the mold 200', then a workpiece attracting/sucking means (not shown) such as a proper magnet or a sucking disk may be provided, so that the workpiece 200 may be assuredly fixed onto the mold 200'.

The embodiment described in the foregoing was adapted such that the mold 200' including the material 25 and the reinforcing member 26 is mounted on the supporting base 24 and the workpiece 200 is positioned by covering the workpiece 200 onto the mold 200'. Therefore, even in the case where the workpiece 200 being press formed is of a very thin plate such as for an automobile body, which is flexible, the same can always be positioned with accuracy and with ease. Therefore, the apparatus of the embodiment shown is extremely effective in automatically working a workpiece of a very thin plate, in particular.

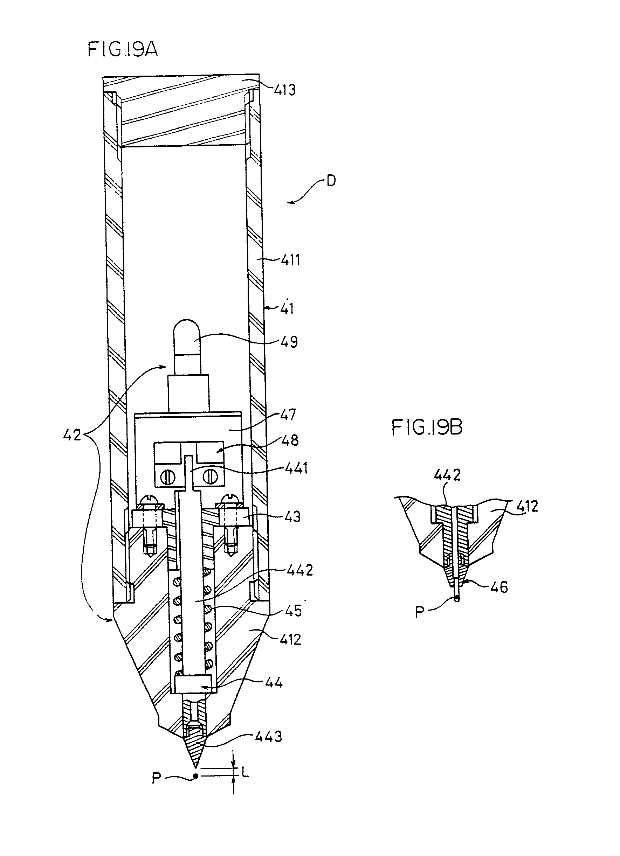

The embodiment to be described with reference to Figs. 19A, 19B and 20 is aimed at a dummy for a torch having the same geometry as that of a cutting/welding torch in an automatic cutting or welding robot.

Conventionally, in making a teaching operation in an automatic welding robot, for example, with a view to moving a welding torch along a welding line of a workpiece with an optimum attitude, it is sometimes necessary to provide the above described robot with a dummy in place of the torch. However, in making a teaching operation using such dummy, it is difficult to discern with a naked eye whether the position of the welding point at the tip end of the dummy has coincided with the position of the above described welding line, due to the fact that illumination in a factory is insufficient or the workpiece is glossy, with the result that the teaching operation is tiresome.

The embodiment in description was implemented in consideration of the above described circumstances and is aimed at provision of a dummy for cutting/welding torch which is capable of a teaching operation with ease even in the case where the ambient illumination is insufficient or the workpiece is glossy. Now the embodiment will be described in detail in the following. Meanwhile, although the embodiment is described as embodied in a dummy for a welding torch in an automatic welding robot (of a rectangular coordinates system), it is pointed out that application of the same is not limited to the embodiment shown.

In the case of the embodiment shown, the workpiece 200 is as shown in Fig. 17 and the same is supported by a mechanism shown in Figs. 18A and 18B. Now referring to Figs. 19A and 19B, "D" denotes a dummy of substantially the same geometry as a plasma torch T. "41" denotes a dummy main body, which comprises an intermediate cylindrical member 411, a tip end hollow member 412 and a rear end lid 413, these components 411, 412 and 413 being coupled by being screwed as shown in Fig. 19A. "43" denotes a hollow auxiliary member fixed to the rear end portion of the member 412. "44" denotes a tapered rod loosely fitted into the respective hollow portions of the members 412 and 43 and urged to be protruded to the tip end of the main body 11 by means of a spring 45 (and fixed to be non-rotatable) with respect to the member 43. Meanwhile, the rod 44 of the embodiment shown comprises a hollow main rod portion 442 formed in a plate form 441 at the rear end portion and a tapered portion 443 detachable at the tip end. Furthermore, when the tapered portion 443 is removed, instead the writing means 46 (in the embodiment shown a pen of a ball point pen) can be mounted as shown in Fig. 19B. The position of the welding point P of the dummy in D the case where the tapered portion 443 is mounted may be positioned at the location spaced part forward by the distance L (in actually 0.5 mm) from the tip end of the tapered portion 443 and the position of the cutting point of the dummy in the case where the writing means 46 is mounted is positioned to the location slightly spaced rearward from the pen tip point portion of the ball point pen 46. "47" denotes an electric component fixing plate which is formed integrally of the member 43. "48" denotes a rod retraction detector (in the case of the embodiment a photosensor) provided to the plate 47 at the position where the plate portion 441 of the rod 44 may be sandwiched. Meanwhile, the detector 48 has

16

been adapted to provide a signal when the rod 44 is retracted approximately 1 mm from a normally protruded position. "49" denotes a light source mounted to the plate 47. Meanwhile, the embodiment shown is structured such that the member 412 is formed with a light transmissive material and the member 412 is covered with a reflecting material (coated with a silver colored paint, for example) excluding the tip end portion of the member 412, so that the same serves as a light transmissive member for transmitting the light from the light source 49 to the vicinity of the tip end of the rod 44. Thus the light source 49 and the member 412 constitute an illuminating means 42 for illuminating the vicinity of the tip end of the rod 44. Furthermore the embodiment is adapted to be capable of setting the teaching mode MZT while the above described detector 48 is in an operable state. To that end, the mode selection switch 331 of the operation table 300 shown in Fig. 3, for example, is structured to be capable of setting selectively the mode MZT in addition to the previously described modes M, MT, ST, TE and A. At the same time, the signal from the above described detector 48 is fed to the computer 400 (Fig. 2) through the bus 500.

In the following the operation of the embodiment will be described with reference to Fig. 20. First the mold 200' of the workpiece 200 as shown in Fig. 18A is placed on a predetermined position on the pipes 241 to 243 of the supporting base 24 and then the workpiece 200 is covered on the above described mold 200' and the same is positioned and fixed. Meanwhile, the cutting line 201 is written in advance on the workpiece 200 and the dummy D is fixed to the fixing means 15 in place of the torch T. The tapered portion 443 is mounted to the tip end of the rod 44 of the dummy D, as shown in Fig. 19A.

First the operator selects the switch 331 to the mode MZT. At that time the light source 49 has been turned on. Then the switches $334_x$ to $334_\phi$ are operated so that the dummy is manually position controlled for the respective control axes and the position of the cutting point P (Fig. 19A) is brought to the required point being taught on the cutting line 201 (Fig. 17), whereupon the switch 333 is depressed. Then the computer 400 receives the outputs of the respective position sensors (corresponding to $605_x$ in Fig. 4) at that time, thereby to store the same in the memory 404 as the position information. The operator thus teaches the positions of a plurality of points being taught and commanded speeds by the switch 332, thereby to store the same as a series of user programs in the memory 403.

In making these teaching operations, since the light source 49 has been turned on and the member 412 is made of a light transmissive material the outer surface of which has been coated with a silver colored paint, excluding the tip end portion, the light beam from the light source 49 sufficiently illuminates the vicinity of the tip point of the rod 44, i.e. the vicinity of the position of the cutting point P. If and when the illumination in the factory is not sufficient or the surface of the workpiece 200 is glossy, then it is very difficult to make a teaching operation of positioning the cutting point P to the required point on the cutting line 201 without the illuminating means 42; however, employment of the illuminating means 42 much facilitate the teaching operation. Furthermore, in the teaching operation, if the tapered portion 443 comes in contact with the workpiece 200 and the rod 44 is retracted more than 1 mm, then the detector 48 detects interruption by the plate portion 441 to provide a signal. The computer 400 is responsive to the output signal to command a new position in the Z axis direction (of the current position ZE+ΔZ in the Z axis) in preference to the command in the Z axis direction through operation of the switch $334_x$ by the operator. Meanwhile, ZE is an output value from the position sensor of the Z axis positioning apparatus $600_z$ when the output is obtained from the detector 48 and ΔZ is a predetermined value stored in advance in the memory 403. Thus, as soon as the dummy D comes in contact with the workpiece 200 and the rod 44 is retracted more than 1 mm, the same is raised only by ΔZ and the dummy D is released from the above described contact. Accordingly, even if the cutting line 201 is curved in a 3-dimension manner, the operator can manually control the position in the X and Y directions without anxiety as to the position in the Z axis direction. Furthermore, when the dummy D is raised only by the above described ΔZ, the operator may fix the same as it stand with respect to the X and Y axes and may lower the dummy D by operating the same only in the Z axis direction. Thus the teaching operation is more facilitated, as is readily understood.

If and when the teaching operation is completed, this time the switch 331 is turned to the mode TE and the program prepared by the teaching is executed in an attempt to make dummy D move on a test basis with respect to the workpiece 200. At that time the tapered portion 443 is in advance removed from the main rod portion 442 and instead the writing means 46 is instead mounted to the main rod portion 442, as shown in Fig. 19B. Meanwhile, the color of writing means 46 is selected to be different from the color of the line in advance drawn as the cutting line 201 at the beginning. Then upon depression of the switch 333, the dummy D is position controlled in accordance with the above described program. The position of the cutting point P of the dummy D at that time has been positioned slightly rearward of the tip end portion of the writing means 46 and therefore the dummy D moves as the tip end of the writing means 46 is in contact with the surface of the workpiece 200. Accordingly, a line is drawn as a moving locus of the tip end portion of the writing means 46 on the surface of the workpiece 200 and, by checking whether this line coincides with the line drawn at the beginning as a line being cut, accuracy of the above described position being taught can be confirmed. In the case where it is necessary to amend the position, it is easy to determine how much should be amended.

The foregoing description is only by way of an example and the illuminating means 42 may be formed such that the member 412 is formed as a light transmissive material and the rod 44 is formed as a light transmissive material. In such a case, it is not necessary to coat a reflecting material on the outer surface of the main body 41.

As described in the foregoing, the embodiment was structured such that the rod 44 is retractile at the tip end portion of the main body 41 and is inserted to be urged to be protruded by the spring 45 and the vicinity of the tip end of the rod 44 is illuminated by the illuminating means 42. Therefore, in making a teaching operation, even if an operator erroneously operates the apparatus to make the tip end of the dummy D collide with the workpiece 200, the rod 44 is only retracted against the spring 45 and the dummy D or the fixing member 15 is not damaged nor the position of the point P is misaligned. Furthermore, even in the case where the illumination in a factory is not sufficient or the workpiece 200 is glossy, an operation for making the position of the point P coincide with the position on the line 201 with a naked eye becomes very easy and a meritrious effect of the embodiment is remakable.

**Claims**

1. A system for the automatic position control of a movable device (109), comprising means (300) operable in a teaching mode of the system for inputting positional data of a plurality of designated points (Fig. 6 $\vec{R_i}$, $\vec{R}_{i+1}$, $\vec{R}_{i+2}$, $\vec{R}_{i+3}$; Fig. 12: $t_1$—$t_8$ Fig. 15: $P_{i-1}$—$P_{i-2}$) on a desired path of movement of said device (108); smoothing means (400) for evaluating from said input positional data a formula defining a curve which smoothly connects said points; interpolation means (300, 400) for determining command positions, ($P_i$—$P_{i+3}$) along said curve; and drive means ($600_x$—$600_\theta$) for driving said movable device in accordance with command data associated with said command positions, characterised in that
said interpolation means (300, 400) is arranged to determine said command positions ($\vec{P_i}$—$\vec{P}_{i+3}$) at regular time intervals and to cause said drive means ($600_x$—$600_\theta$) to move the movable device (109) at a substantially constant speed (Vc) and in that there is provided means (Fig. 7) for predetermining a dead time ($\tau$) and a first order delay (T) in the response characteristics of said drive means ($600_x$—$600_\theta$), means (Fig. 7) for correcting said command positions ($P_i$—$P_{i+3}$) in accordance with said predetermined first order delay (T), to generate command position information and, output delaying means (Fig. 7) for delaying the output of said command position information in accordance with said predetermined dead time ($\tau$), said output delaying means (Fig. 7) comprising clock pulse generating means ($608_x$) for generating clock pulses having a repetition frequency capable of time-counting said dead time ($\tau$), store-means ($607_x$) having a plurality of storage regions, the number of said storage regions being related to said dead time ($\tau$) and said repetition frequency of said clock pulses, and means for sequentially shifting command position information entered into said store means (607) from one storage region to the next.

2. An automatic position control system as claimed in claim 1, further comprising:
means (321) actuable for instructing disabling of the smoothing means (400);
detecting means for detecting whether the next designated point (Fig. 15: $P_{i+1}$) following a previous designated point, (Fig. 15: $P_i$) is a point for which disabling of the smoothing means (400) has been specified by actuation of said actuable means (321); and
disabling means responsive to detection by said detecting means that the next designated point (Fig. 15: $P_{i+1}$) is a said specified point, for disabling said smoothing means (400) from evaluation of a said formula for a curve portion connecting said next (Fig. 15: $P_{i+1}$) and said previous (Fig. 15: $P_i$) designated points.

3. An automatic position control system as claimed in claim 2 wherein a memory flag (L) is arranged to be set in response to the operation of said actuable means (321) for any said designated point (Fig. 15: $P_i$), and wherein said detecting means is adapted to detect said set condition of said memory flag (L).

4. An automatic position control system according to claim 2 or claim 3, further comprising linear interpolation means responsive to detection by said detecting means that said next designated point (Fig. 15: $P_{i+1}$) is a said specified point for determining command positions leading to said next designated point from said previous designated point (Fig. 15: $P_i$) by linear interpolation.

5. An automatic position control system as claimed in any preceding claim wherein said movable device comprises a mounting member (108) for mounting a torch means (109), and wherein there is further provided a dummy torch means (D) adapted to be mounted to said mounting member (108) in replacement of said torch means (109), said dummy torch means comprising a hollow main body (41) having a tip end (412), a tapered rod (44) loosely fitted to be protrusile/retractile with respect to said tip end (412) of said main body and urged to be protruded with respect thereto, and illuminating means (42) including a light source (49) provided in the hollow main body (41) and a light transmissive member (412) arranged to guide the light from said light source (49) to the vicinity of the tip end (443) of said rod (44).

6. An automatic position control system according to claim 5 wherein said main body (41) is light transmissive.

7. An automatic position control system according to claim 6, wherein said illuminating means (42) comprises a reflecting member (412) provided on the outer surface of said main body (41) of said light transmissive material, excluding the tip end portion of said main body, for guiding the light from said light source to the vicinity of the tip end (443) of said rod (44).

8. An automatic position control system according to any of claims 5 to 7 wherein said rod (44) is light transmissive.

9. An automatic position control system according to any of claims 5 to 8, wherein said rod (44) is structured such that the tapered tip end portion (443) thereof is detachable and wherein there is further provided writing means (46) adapted for attachment to said rod (44) in place of said tapered tip end (443), whereby the tip end position when said writing means (46) is attached is slightly protruded with respect to the tip end portion (443) when said tapered tip end portion is mounted.

10. An automatic position control system as claimed in any of claims 5 to 9 wherein there is further provided a detector (48) arranged within the hollow portion of said main body and adapted to detect the retraction of said rod (44).

11. An automatic position control system as claimed in any preceding claim wherein said movable device (108) is operable for performing a required operation on a press-formed workpiece (200) and in which there is further provided means (24, 241, 242, 243) for positioning said press-formed workpiece, (200) said work piece positioning means comprising:

a supporting base (24); and

an assembly including a moulded support member (200') formed from a time-settable material and using the press-formed workpiece (200) as a mould, and a reinforcing member (26) having a support base (263) set within said support member and a mounting portion (262) exposed therefrom;

said mounting portion (262) being mountable at a predetermined position on said support base (263).

12. An automatic position control system according to claim 11 wherein said time settable material comprises a water settable material such as plaster, cement or the like.

13. An automatic position control system according to claim 11, wherein said time settable material comprises resin.

14. An automatic position control system according to any of claims 11 to 13 wherein there is further provided means for applying a retention force for holding said press-formed workpiece (200) on said support member (200').

15. An automatic position control system according to any of claims 11 to 14 wherein said support portion of said reinforcing member is adapted to be detachable from said supporting base for replacement of the assembly with another assembly adapted for the support of a different press-formed workpiece.

16. An automatic position control system according to any preceding claim wherein said movable device (Fig. 9:15) is mounted on a structure which comprises:

a base (Fig. 9:1);

an arm (Fig. 9:3) carried at one end by said base (1) to be movable in opposite directions transverse to the arm (1);

a moving member (Fig. 9:7) carried by said arm (1) to be movable in opposite directions along said arm;

a column (Fig. 9:10) carried by said moving member to be movable in opposite vertical directions and carrying said movable device (15);

a spring balancer (Fig. 9:18) fixed to one end of said arm (3);

first and second pulleys separately supported by said moving member (7) on respective shafts (19a, 20a) extending parallel to said directions of movement of the arm (3); and

a third pulley (21) supported by said column (10) on a shaft (21a) parallel to the axes of said first and second pulleys;

wherein an elongate flexible element (18a) extends from said balancer (18), and is fixed at its tip end to the end of said arm (3) remote from the base (1), and is entrained midway around said first, third and second pulleys in that order, said flexible element (18a) being tensioned with a tension force set to approximately a half of the total weight of said column (10) and the components carried by said column, and wherein said drive means ($600_x$—$600_\theta$) comprises at least first moving means (4) for moving said arm (3) relative to said base (1), second moving means (8) for moving said moving member (7) relative to said arm (3), and third moving means (11) for moving said column (10) relative to said moving member (7).

17. An automatic position control system according to any preceding claim wherein said movable device (Fig. 1:108, Fig. 9:15) is mounted so as to be rotatable about a predetermined rotation axis (Fig. 1:106a; Fig. 9:13), and has a working point (Fig. 1:109a, Fig. 9:P) which is always positioned on said predetermined rotation axis.

18. An automatic position control system according to claim 17 wherein said movable device (Fig. 1:108 Fig. 9:15) is mounted so as to be rotatable about a further rotation axis (Fig. 9:16) which extends at a predetermined angle with respect to said first-mentioned rotation axis (Fig. 1:106a, Fig. 9:13), the mounting of the device being such that an axis of the device itself is set at a predetermined angle (Fig. 1:4) with respect to said further rotation axis (Fig. 9:16) and such that said working point (Fig. 1:109a, Fig. 9:P) of said device is also always positioned on said further rotation axis.

**Patentansprüche**

1. Einrichtung zur automatischen Positionsregelung einer beweglichen Vorrichtung (109), mit in einem Lernmodus der Einrichtung bedienbaren Mitteln (300) zur Eingabe von Positionsdaten einer Vielzahl von bestimmten Punkten (Fig. 6 $\vec{R}_i$, $\vec{R}_{i+1}$, $\vec{R}_{i+2}$, $\vec{R}_{i+3}$; Fig. 12: $t_1$—$t_8$ Fig. 15: $P_{i-1}$—$P_{i-2}$) auf einer gewünschten Bewegungsbahn der Vorrichtung (108), Glättungsmitteln (400) zur Bestimmung einer Formel, die eine die Punkte glatt verbindende Kurve definiert, anhand der eingegebenen Positionsdaten, Interpolationsmitteln (300, 400) zur Bestimmung von Befehlspositionen ($P_i$—$P_{i+3}$) längs der Kurve und Antriebsmitteln

$(600_x - 600_\theta)$ zum Antrieb der beweglichen Vorrichtung in Übereinstimmung mit den den Befehlspositionen zugeordneten Befehlsdaten, dadurch gekennzeichnet,

daß die Interpolationsmittel (300, 400) derart ausgelegt sind, daß sie die Befehlspositionen $(\vec{P}_i - \vec{P}_{i+3})$ in regelmäßigen Zeitintervallen bestimmen und die Antriebsmittel $(600_x - 600_\theta)$ veranlassen, die bewegliche Vorrichtung (109) mit einer im wesentlichen konstanten Geschwindigkeit (Vc) zu bewegen, und daß Mittel (Fig. 7) zur Vorbestimmung einer Totzeit $(\tau)$ und einer Verzögerungszeit (T) erster Ordnung in der Ansprechcharakteristik der Antriebsmittel $(600_x - 600_\theta)$, Mittel (Fig. 7) zur Korrektur der Befehlspositionen $(P_i - P_{i+3})$ entsprechend der vorbestimmten Verzögerungszeit (T) erster Ordnung, zur Erzeugung von Befehlspositionsinformationen, und Ausgangsverzögerungsmittel (Fig. 7) zur Verzögerung der Ausgabe genannten Befehlspositionsinformationen entsprechend der vorbestimmten Totzeit $(\tau)$ vorhanden sind, wobei die Ausgangsverzögerungsmittel (Fig. 7) Taktimpuls-Erzeugungsmittel $(608_x)$ zur Erzeugung von Taktimpulsen mit einer Wiederholungsfrequenz, die zur Zeitzählung der Totzeit $(\tau)$ geeignet ist, Speichermittel $(607_x)$ mit mehreren Speicherbereichen, deren Anzahl mit der Totzeit $(\tau)$ und der Wiederholungsfrequenz der Taktimpulse in Beziehung steht, und Mittel zum sequentiellen Durchschieben der in die Speichermittel (607) eingegebenen Befehlspositionsinformationen von einem Speicherbereich zum nächsten umfassen.

2. Automatische Positionsregeleinrichtung nach Anspruch 1 mit:

Befehlseingabemitteln (321) zum Blockieren der Glättungsmittel (400),

Abtastmitteln zur Abtastung, ob der nächste bestimmte Punkt (Fig. 15: $P_{i+1}$), der einem zuvor bestimmten Punkt (Fig. 15: $P_i$) nachfolgt, durch die Befehlseingabemittel (321) als ein Punkt spezifiziert wurde, für den die Glättungsmittel (400) zu blockieren sind, und

Blockiermitteln, die auf die durch die Abtastmittel getroffene Feststellung ansprechen, daß der nächste bestimmte Punkt (Fig. 15: $P_{i+1}$) ein solcher spezifizierter Punkt ist, um die Glättungsmittel (400) daran zu hindern, die genannte Formel für einen Kurvenabschnitt zu bestimmen, der den besagten nächsten Punkt (Fig. 15: $P_{i+1}$) mit dem vorangehenden Punkt (Fig. 15: $P_i$) verbindet.

3. Automatische Positionsregeleinrichtung nach Anspruch 2, bei der auf die Betätigung der Befehlseingabemittel (321) für irgendeinen der bestimmten Punkte (Fig. 15: $P_i$) hin ein Erinnerungs-Flag (L) gesetzt wird, und bei dem die Abtastmittel den Zustand des Erinnerungs-flags (L) abtasten.

4. Automatische Positionsregeleinrichtung nach Anspruch 2 oder 3, mit linearen Interpolationsmitteln, die durch die durch die Abtastmittel getroffene Feststellung aktiviert werden, daß der nächste bestimmte Punkt (Fig. 15: $P_{i+1}$) ein solcher spezifizierter Punkt ist, und die durch lineare Interpolation Befehlspositionen bestimmen, die von dem vorangehenden Punkt (Fig. 15: $P_i$) zu dem nächsten Punkt führen.

5. Automatische Positionsregeleinrichtung nach einem der vorstehenden Ansprüche, bei der die bewegliche Vorrichtung ein Montagelement (108) zur Montage eines Brenners (109) aufweist, und bei der ferner eine Brennerattrappe (D) vorgesehen ist, die anstelle des Brenners (109) an dem Montageelement (108) montierbar ist, und einen hohlen Hauptkörper (41) mit einer Spitze (412), eine lose in die Spitze (412) eingesetzte und in Bezug auf diese vorschiebbare und zurückziehbare und in Vorschubrichtung vorgespannte verjüngte Stange (44) und Beleuchtungsmittel (42) aufweist, welche Beleuchtungsmittel eine in dem hohlen Hauptkörper (41) angeordnete Lichtquelle (49) und ein lichtdurchlässiges Element (412) umfassen, das so angeordnet ist, daß es das Licht von der Lichtquelle (49) in die Nähe der Spitze (443) der Stange (44) leitet.

6. Automatische Positionsregeleinrichtung nach Anspruch 5, bei der der Hauptkörper (41) lichtdurchlässig ist.

7. Automatische Positionsregeleinrichtung nach Anspruch 6, bei der die Beleuchtungsmittel (42) ein reflektierendes Element (412) aufweisen, das an der äußeren Oberfläche des Hauptkörpers (41) aus lichtdurchlässigem Material, mit Ausnahme des Bereichs der Spitze des Hauptkörpers angeordnet ist, um das Licht von der Lichtquelle bis in die Nähe der Spitze (434) der Stange (44) zu leiten.

8. Automatische Positionsregeleinrichtung nach einem der Ansprüche 5 bis 7, bei der die Stange (44) lichtdurchlässig ist.

9. Automatische Positionsregeleinrichtung nach einem der Ansprüche 5 bis 8, bei der die Stange (44) derart gestaltet ist, daß der verjüngte Spitzenbereich (443) derselben lösbar ist, und bei der ferner Schreibmittel (46) vorgesehen sind, die anstelle der verjüngten Spitze (443) an der Stange (44) anbringbar sind, wobei, wenn die Schreibmittel (46) montiert sind, die Spitzenposition etwas vorgerückt ist in Bezug auf den Spitzenbereich (443), wenn der verjüngte Spitzenbereich montiert ist.

10. Automatische Positionsregeleinrichtung nach einem der Ansprüche 5 bis 9, bei der ferner in dem hohlen Abschnitt des Hauptkörpers ein Detektor (48) zur Abtastung der Einfahrbewegung der Stange (44) vorgesehen ist.

11. Automatische Positionsregeleinrichtung nach einem der vorstehenden Ansprüche, bei der die bewegliche Vorrichtung (108) betreibbar ist, um eine gewünschte Operation an einem preßgeformten Werkstück (200) durchzuführen, und bei der außerdem Mittel (24, 241, 242, 243) zum Positionieren des preßgeformten Werkstückes (200) vorhanden sind, wobei die Werkstück-Positioniermittel einen tragenden Sockel (24) und

eine Anordnung mit einem geformten Stützelement (200'), das unter Verwendung des preßgeformten Werkstücks (200) als Form aus einem zeit-aushärtbaren Material hergestellt ist, und einem Verstärkungsteil (26), das mit einem in das Stützelement eingesetzten Tragsockel (263) und einem von diesem vorspringenden Montageteil (262) versehen ist, aufweist,

wobei das Montageteil (262) in einer vorgegebenen Position auf dem Tragsockel (263) montierbar ist.

12. Automatische Positionsregeleinrichtung nach Anspruch 11, bei der das zeit-aushärtbare Material ein wasserhärtendes Material, wie etwa Gips, Zement oder dergleichen, enthält.

13. Automatische Positionsregeleinrichtung nach Anspruch 11, bei der das zeit-aushärtbare Material ein Harz enthält.

14. Automatische Positionsregeleinrichtung nach einem der Ansprüche 11 bis 13, bei der ferner Mittel zur Ausübung einer Haltekraft zum Halten des preßgeformten Werkstücks (200) auf dem Stützelement (200') vorgesehen sind.

15. Automatische Positionsregeleinrichtung nach einem der Ansprüche 11 bis 14, bei der der Stützbereich des Verstärkungsteils von dem Tragsockel lösbar ist, um die Anordnung durch eine andere Anordnung auszutauschen, die für die Unterstützung eines anderen preßgeformten Werkstücks angepaßt ist.

16. Automatische Positionsregeleinrichtung nach einem der vorhergehenden Ansprüche, bei der die bewegliche Vorrichtung (Fig. 9:15) auf eine Anordnung montiert ist, die folgende Bauteile umfaßt:

einen Sockel (Fig. 9:1),

einen Arm (Fig. 9:3), der mit einem Ende an dem Sockel (1) gehalten und in entgegengesetzte Richtungen quer zu dem Arm (1) bewegbar ist,

ein an dem Arm (1) gehaltenes bewegliches Teil (Fig. 9:7), das in entgegengesetzte Richtungen längs des Armes bewegbar ist,

eine durch das bewegliche Teil gehaltenen Säule (Fig. 9:10), die senkrecht aufwärts und abwärts bewegbar ist und die bewegliche Vorrichtung (15) trägt,

ein an einem Ende des Arms (3) befestigtes Feder-Ausgleichselement (Fig. 9:18),

erste und zweite Riemenscheiben, die getrennt auf parallel zur Bewegungsrichtung des Armes (3) verlaufenden Achsen (19a bzw. 20a) an dem beweglichen Teil (7) montiert sind, und

eine dritte Riemenscheibe (21), die auf einer parallel zu den Achsen der ersten und zweiten Riemenscheiben verlaufenden Achse (21a) an der Säule (10) montiert ist,

wobei von dem Ausgleichselement (18) ein langgestrecktes flexibles Element (18a) ausgeht, das mit seinem freien Ende an dem von dem Sockel (1) abgewandten Ende des Arms (3) befestigt ist und in der Mitte in der angegebenen Reihenfolge über die erste, dritte und zweite Riemenscheibe geführt ist und das mit einer Spannkraft gespannt ist, die auf annähernd die Hälfte des Gesamtgewichts der Säule (10) und der durch die Säule getragenen Bauteile eingestellt ist, und wobei die Antriebsmittel ($600_x$—$600_\theta$) wenigstens erste Antriebsmittel (4) zur Bewegung des Arms (3) in Bezug auf den Sockel (1), zweite Antriebsmittel (8) zur Bewegung des beweglichen Teils (7) in Bezug auf den Arm (3) und dritte Antriebsmittel (11) zur Bewegung der Säule (10) in Bezug auf das bewegliche Teil (7) aufweisen.

17. Automatische Positionsregeleinrichtung nach einem der vorstehenden Ansprüche, bei der die bewegliche Vorrichtung (Fig. 1:108, Fig. 9:15) derart montiert ist, daß sie um eine vorgegebene Drehachse (Fig. 1:106a; Fig. 9:13) drehbar ist, und einen Arbeitspunkt (Fig. 1:109a, Fig. 9:P) aufweist, der ständig auf der vorgegebenen Drehachse liegt.

18. Automatische Positionsregeleinrichtung nach Anspruch 17, bei der die bewegliche Vorrichtung (Fig. 1:108, Fig. 9:15) derart montiert ist, daß sie um eine weitere Drehachse (Fig. 9:16) drehbar ist, die in einem vorgegebenen Winkel zu der zuvor erwähnten Drehachse (Fig. 1:106a, Fig. 9:13) verläuft, wobei die Vorrichtung so montiert ist, daß eine Achse der Vorrichtung selbst einen vorgegebenen Winkel (Fig. 1:4) mit der weiteren Drehachse (Fig. 9:16) bildet und der Arbeitspunkt (Fig. 1:109a, Fig. 9:P) der Vorrichtung außerdem ständig auf der weiteren Drehachse liegt.

**Revendications**

1. Système de commande automatique de position d'un dispositif mobile (109), comportant des moyens (300) pouvant fonctionner selon un mode d'enseignement du système pour introduire des données de position d'une pluralité de points désignés (figure 6, $\vec{R}_i$, $\vec{R}_{i+1}$, $\vec{R}_{i+2}$, $\vec{R}_{i+3}$; figure 12: $t_1$—$t_8$, figure 15: $P_{i-1}$—$P_{i-2}$) sur une trajectoire désirée de déplacement dudit dispositif (108), des moyens de lissage (400) permettant d'évaluer, à partir desdites données de position d'entrée, une formule définissant une courbe qui raccorde de façon uniforme lesdits points; des moyens d'interpolation (300, 400) servant à déterminer des positions de commande ($P_i$—$P_{i+3}$) le long de ladite courbe, et des moyens d'entraînement ($600_x$—$600_\theta$) pour l'entraînement dudit dispositif mobile conformément aux données de commande associées auxdites positions de commande, caractérisé en ce que

lesdits moyens d'interpolation (300, 400) sont agencés de manière à déterminer lesdites positions de commande ($\vec{P}_i$—$\vec{P}_{i+3}$) à des intervalles de temps réguliers et à amener lesdits moyens d'entraînement ($600_x$—$600_\theta$) à déplacer le dispositif mobile (109) à une vitesse (Vc) essentiellement constante, et en ce qu'il est prévu des moyens (figure 7) servant à prédéterminer un temps mort ($\tau$) et un retard du premier ordre (T) dans les caractéristiques de réponse dudit moyen d'entraînement ($600_x$—$600_\theta$), des moyens (figure 7) pour corriger lesdites positions de commande ($P_i$—$P_{i+3}$) conformément audit retard du premier ordre (T) prédéterminé, de manière à produire une information de position de commande, et des moyens de retard

**0 042 202**

de sortie (figure 7) servant à retarder le signal de sortie de ladite information de position de commande conformément audit temps mort prédéterminé ($\tau$), lesdits moyens de retard de sortie (figure 7) comprenant des moyens ($608_x$) de production d'impulsions d'horloge, servant à produire des impulsions d'horloge possédant une fréquence de répétition permettant d'effectuer le comptage de la durée dudit temps mort ($\tau$), des moyens de mémoire ($607_x$) possédant une pluralité de zones de mémoire, dont le nombre est associé audit temps mort ($\tau$) et à ladite fréquence de répétition desdites impulsions d'horloge, et des moyens pour déplacer séquentiellement l'information de position de commande introduite dans lesdits moyens de mémoire (607) depuis une zone de mémoire à la suivante.

2. Système de commande automatique de position selon la revendication 1, comprenant en outre des moyens (321) pouvant être actionnés pour provoquer l'invalidation des moyens de lissage (400);

— des moyens de détection servant à détecter si le point suivant désigné (figure 15; $P_{i+1}$) situé en aval d'un point désigné précédent (figure 15:$P_i$) est un point pour lequel l'invalidation des moyens de lissage (400) a été spécifiée au moyen de l'actionnement desdits moyens (321) pouvant être actionnés; et

— des moyens d'invalidation sensibles à la détection par lesdits moyens de détection du fait que le point désigné suivant (figure 15:$P_{i+1}$) est ledit point spécifié et servant à empêcher lesdits moyens de lissage (400) d'évaluer ladite formule pour un élément de courbe reliant ledit point désigné immédiatement suivant (figure 15:$P_{i+1}$) et ledit point désigné précédent (figure 15:$P_i$).

3. Système de commande automatique de position selon la revendication 2, dans lequel un drapeau de mémoire (L) est agencé de manière à être positionné en réponse à l'actionnement desdits moyens (321) pouvant être actionnés, pour n'importe quel point désigné (figure 15:$P_i$), et dans lequel lesdits moyens de détection sont aptes à détecter ledit état de positionnement dudit drapeau de mémoire (L).

4. Système de commande automatique de position selon la revendication 2 ou 3, comportant en outre des moyens d'interpolation linéaire, sensibles à la détection, par lesdits moyens de détection, du fait que ledit point désigné suivant (figure 15:$P_{i+1}$) est ledit point spécifié pour la détermination des positions de commande aboutissant audit point désigné suivant à partir dudit point désigné précédent (figure 15:$P_i$) par interpolation linéaire.

5. Système de commande automatique de position selon l'une quelconque des revendications précédentes, dans lequel ledit dispositif mobile comporte un organe de support (108) servant au montage de moyens en forme de chalumeau (109), et dans lequel il est en outre prévu des moyens en forme de chalumeau (D) fictifs, aptes à être montés sur ledit organe de support (108) en remplacement desdits moyens en forme de chalumeau (109), lesdits moyens en forme de chalumeau fictifs comprenant un corps principal creux (41) possédant une extrémité de tête (412), une tige de forme conique (44) montée de façon lâche de manière à pouvoir être amenée en saillie être rétractée par rapport à ladite extrémité de tête (412) dudit corps principal et repoussée de manière à faire saillie par rapport à ladite extrémité de tête, et des moyens d'éclairage (42) comportant une source de lumière (49) disposée dans le corps creux principal (41) et un organe (412) de transmission de la lumière, agencé de manière à guider la lumière depuis ladite source de lumière (49) jusqu'au voisinage de ladite extrémité de tête (143) de ladite tige (44).

6. Système de commande automatique de position selon la revendication 5, dans lequel ledit corps principal (41) transmet la lumière.

7. Système de commande automatique de position selon la revendication 6, dans lequel lesdits moyens d'éclairage (42) comprennent un élément réfléchissant (412) prévu sur la surface extérieure dudit corps principal (41) dudit matériau transmettant la lumière, en dehors de la partie d'extrémité de tête dudit corps principal, pour le guidage de la lumière depuis ladite source de lumière jusqu'au voisinage de l'extrémité de tête (443) de ladite tige (44).

8. Système de commande automatique de position selon l'une quelconque des revendications 5 à 7, dans lequel ladite tige (44) transmet la lumière.

9. Système de commande automatique de position selon l'une quelconque des revendications 5 ou 8, dans lequel ladite tige (44) est structurée de telle sorte que la partie d'extrémité de tête de forme conique (443) de la tige est détachable et dans lequel il est en outre prévu des moyens d'écriture (46) aptes à être fixés sur ladite tige (44) à la place de ladite extrémité de tête conique (443), ce qui a pour effet que, lorsque lesdits moyens d'écriture (46) sont fixés, l'extrémité de tête se trouve dans une position faisant légèrement saillie par rapport à la partie (443) de l'extrémité de tête, lorsque ladite partie d'extrémité de tête est montée.

10. Système de commande automatique de position selon l'une quelconque des revendications 5 à 9, dans lequel il est en outre prévu un détecteur (48) disposé à l'intérieur de la partie creuse dudit corps principal et apte à détecter le retrait de ladite tige (44).

11. Système de commande automatique de position selon l'une quelconque des revendications précédentes, dans lequel ledit dispositif mobile (108) peut être actionné de manière à réaliser une opération requise sur une pièce à traiter (200) emboutie, et dans lequel il est en outre prévu des moyens (24, 241, 242, 243) pour positionner ladite pièce à traiter (200) emboutie, lesdits moyens de positionnement de la pièce à traiter comprenant:

— une base de support (24); et

22

— un ensemble incluant un organe de support moulé (200') formé en un matériau durcissable dans le temps et utilisant la pièce à traiter (200) emboutie en tant que moule, et un organe de renforcement (26) comportant une base de support (263) placée à l'intérieur dudit organe de support, et une partie de montage (262) faisant saillie à partir de l'organe de support;

— ladite partie de montage (262) pouvant être montée dans une position prédéterminée sur ladite base de support (263).

12. Système de commande automatique de position selon la revendication 11, dans lequel ledit matériau durcissable dans le temps est constitué par un matériau durcissable à l'eau, tel que du plâtre, du ciment ou analogue.

13. Système de commande automatique de position selon la revendication 11, dans lequel ledit matériau durcissable dans le temps inclut une résine.

14. Système de commande automatique de position selon l'une quelconque des revendications 11 à 13, dans lequel il est en outre prévu des moyens permettant d'appliquer une force de rétention servant à maintenir ladite pièce à traiter (200) emboutie, sur ledit organe de support (200').

15. Système de commande automatique de position selon l'une quelconque des revendications 11 à 14, dans lequel ladite partie de support dudit organe de renforcement est agencée de manière à être détachable de ladite base de support, de manière à permettre le remplacement de l'ensemble par un autre ensemble adapté pour supporter une pièce à traiter emboutie, différente.

16. Système de commande automatique de position selon l'une quelconque des revendications précédentes, dans lequel ledit dispositif mobile (figure 9:15) est monté sur une structure qui comporte:

— une base (figure 9:1);
— un bras (figure 9:3), porté à une extrémité par ladite base (1) de manière à être mobile dans des directions opposées transversalement par rapport au bras (1);
— un organe mobile (figure 9:7) porté par ledit bras (1) de manière à être déplaçable dans des directions opposées lelong dudit bras;
— une colonne (figure 9:10) portée par ledit organe mobile de manière à être déplaçable dans des directions verticales opposées et portant ledit dispositif mobile (15);
— un dispositif d'équilibrage à ressort (figure 9:10) fixé à une extrémité dudit bras (3);
— des première et seconde poulies supportées séparément par ledit organe mobile (7) sur des arbres respectifs (19a, 26) s'étendant parallèlement auxdites directions de déplacement du bras (3); et
— une troisième poulie (21) supportée par ladite colonne (10) sur un arbre (21a) parallèle aux axes desdites première et seconde poulies; et
— dans lequel un élément flexible allongé (18a) s'étend à partir dudit dispositif d'équilibrage (18) et est fixé, au niveau de son extrémité de tête, à l'extrémité dudit bras (3) distante de la base (1), et est entraîné, au niveau de sa partie médiane, autour desdites première, troisième et seconde poulies dans cet ordre, ledit élément flexible (18a) étant tendu au moyen d'une force de traction réglée à une valeur égale approximativement à la moitié du poids total de ladite colonne (10) et des composants portés par ladite colonne, et dans lequel lesdits moyens d'entraînement (600$_x$—600$_θ$) comportent au moins des premiers moyens d'entraînement (4) servant à déplacer ledit bras (3) par rapport à ladite base (1), des seconds moyens d'entraînement servant à déplacer ledit organe mobile (7) par rapport audit bras (3), et des troisièmes moyens d'entraînement (11) servant à déplacer ladite colonne (10) par rapport audit organe mobile (7).

17. Système de commande automatique de position selon l'une quelconque des revendications précédentes, dans lequel ledit dispositif mobile (figure 1:108, figure 9:15) est monté de manière à pouvoir tourner autour d'un axe de rotation prédéterminé (figure 1:106a; figure 9:13) et comporte un point de travail (figure 1:109a, figure 9:P) qui est toujours positionné sur ledit axe de rotation prédéterminé.

18. Système de commande automatique de position selon la revendication 17, dans lequel ledit dispositif mobile (figure 1:108; figure 9:15) est monté de manière à pouvoir tourner autour d'un autre axe de rotation (figure 9:16), qui fait un angle prédéterminé par rapport audit axe de rotation mentionné en premier (figure 1:106a, figure 9:13), le montage du dispositif étant tel qu'un axe du dispositif lui-même est positionné de manière à faire un angle prédéterminé (figure 1:4) par rapport audit autre axe de rotation (figure 9:16) et de telle manière que ledit point de fonctionnement (figure 1:109a; figure 9:P) dudit dispositif est également toujours positionné sur ledit autre axe de rotation.

23

**0 042 202**

FIG.1

PRIOR ART

1

FIG.2

FIG.3

FIG.4

FROM 500          TO 500                $600_x$

| BUFFER | | COUNTER |

$601_x$                              $606_x$

| SUBTRACTOR |

$602_x$

$\dfrac{D}{A}$ CONVERTER        $603_x$

$604_x$

$605_x$

| POSITION DETECTOR |

4

FIG.5

3

FIG.6

FIG.7

FIG.8

READ POSITION COORDINATES
$\vec{R}_i$ (i;1−n) OF TAUGHT POINT

$\vec{P}_i = \sqrt{3}\left\{\vec{R}_i + \sum\limits_{j=1}^{9}(\vec{R}_{i+j} + \vec{R}_{i-j})\alpha^j\right\}$
---(9)WHERE CALCULATION OF
$\alpha = \sqrt{3}-2$ IS MADE TO EVALUATE
REFERENCE POINT $\vec{P}_i$ FOR CALCU-
LATING FORMULA OF PATH
PASSING $\vec{D}_i$

FOLLOWING EQUATION IS DEFINED
AS A FORMULA FOR A CURVE
CONNECTING POINTS TAUGHT FROM
POINT $\vec{P}_i$
$\vec{D}_i(u) = \sum\limits_{j=0}^{3}(f_j(u)\cdot\vec{P}_{i+j})$---(10)
WHERE $0 \leq u \leq 1$
$f_0 = (1-3u+3u^2-u^3)/6$, $f_1 = (4-6u^2 +3u^3)/6$, $f_2 = (1+3u+3u^2-3u^3)/6$
$f_3 = u^3/6$

CONVERSION OF $u = at^3+bt^2+ct$
---(11) IS MADE SO THAT $(d\vec{D}_i/du)$
MAY BE EQUAL AT POINTS
OF $u= 0, 1/2, 1$, WHEREBY OF
COEFFICIENT a , b AND c ARE
DETERMINED

VALUE $t_0$ OF t AT u=1 IS
EVALUATED TO MAKE SMOOTH
THE CONNECTION AT RESPECTIVE
POINTS $\vec{R}_i$ WHERE UPON
REFERENCE $\Delta t$ OF t IN
RESPECTIVE REGIONS IS
ASSUMED TO BE $t_0/n$ (n IS
INTEGER )

THE RESULTS $a, b, c, \vec{P}_i, \Delta t$ OF
CALCULATION SOFAR DESCRIBED
ARE STORED IN MEMORY,
WHEREBY OPERATION TIME PERIOD
IN PLAYBACK IS SHORTENED

CALCULATION IS MADE OF
$u = a\Delta t^3+b\Delta t^2+c\Delta t$ USING
REFERENCE $\Delta t$ OF t IN PLAY−
BACK, WHILE $\vec{V} = d\vec{D}/dt$ IS
EVALUATED FROM EQUATIONS
(2) AND (3), WHEREUPON VALUE
OF u IS SUBSTITUTED TO
CALCULATE VALUES OF $\vec{D}$ AND $\vec{V}$

RESPECTIVE VALUES IN CASE
WHERE THE RESPECTIVE
DRIVING SYSTEMS ARE APPRO−
XIMATED WITH DELAY T AND
IDLING TIME PERIOD $\tau d$ IN
ADVANCE THROUGH EXPERIMEN−
TATION AND THESE ARE READ OUT

CALCULATION IS MADE OF $\vec{X} =$
$\vec{D}+T\cdot\vec{V}$ USING VALUES $\vec{D}$ AND $\vec{V}$
CALCULATED IN THE FOREGOING
AS COMMANDED VALUES WITH
DELAY CONSIDERED,
WHEREUPON THE SAME OUTPUTTED
FOR RESPECTIVE AXES

POSITIONING APPARATUSES OF
RESPECTIVE AXES ARE DRIVEN
BY DELAYING COMMANDED
VALUES AS OUTPUTTED BY
TIME PERIOD SUITED FOR
DELAY TIME PERIOD $\tau d$
USING TIMER FUNCTION

FIG.9A

FIG.9B

FIG.10

**0 042 202**

FIG.11

FIG.12

9

FIG.13

START

DATA INCLUDING ATTITUDE IS LOADED AS TEACHING INFORMATION

326 ON?  — NO

YES

"$\alpha\beta$OFF" KEY ON? — NO

YES

DATA EXCLUDING ATTITUDE DATA IS LOADED AS TEACHING INFORMATION

DOES PREVIOUS TAUGHT POINTS HAS ATTITUDE DATA ? — YES

NO

WITHDRAW START POINT DATA DEEMING SAME AS END POINT OF INTERPOLATION

CALCULATE OF DISTANCE
$S = S1 + S2 + S3 + \cdots$

ATTITUDE DATA IS CALCULATED WITH RESPECT TO RESPECTIVE TAUGHT POINTS BETWEEN START AND END POINTS, WHEREBY SAME IS ADOPTED AS TEACHING INFORMATION

$$Di = \frac{Si}{S} \times \Delta D + D$$

CALCULATION OF ALL POINTS ENDED ? — NO

YES

# 0 042 202

## FIG.14

READ POSITION COORDINATES

$\vec{R}_i$ (i; 1−n) OF TAUGHT POINT

---

$\vec{P_i} = \sqrt{3} \{ \vec{R} + \sum\limits_{j=1}^{9} (\vec{R}_{i+j} + \vec{R}_{i-j}) \alpha^j \}$

---(9) WHERE CALCULATION OF

$\alpha = \sqrt{3} - 2$ IS MADE TO EVALUATE

REFERENCE POINT $\vec{P_i}$ FOR CALCU-

LATING FORMULA OF PATH

PASSING $\vec{D_i}$

---

FOLLOWING EQUATION IS DEFINED

AS A FORMULA FOR A CURVE

CONNECTING POINTS TAUGHT FROM

POINT $\vec{P_i}$

$\vec{D_i}(u) = \sum\limits_{j=0}^{3} (f_j(u) \cdot \vec{P}_{i+j})$ ---(10)

WHERE $0 \leqq u \leqq 1$

$f_0 = (1 - 3u + 3u^2 - u^3)/6$, $f_1 = (4 - 6u^2 + 3u^3)/6$, $f_2 = (1 - 3u + 3u^2 - 3u^3)/6$

$f_3 = u^3/6$

---

NUMBER OF DIVISION IS DETER-

MINED FROM MOVING

DISTANCE BETWEEN POINTS

$S = \int_0^1 \left| \dfrac{d}{du} \vec{R}_{i,3}(u) \right| \cdot du$     $M = \dfrac{S}{\Delta S}$

---

MOVING DISTANCE BETWEEN

DIVIDED POINTS IS EVALUATED

$D_m = \int_{u_{m-1}}^{u_m} \left| \dfrac{d}{du} \vec{R}_{i,3}(u) \right| \cdot du$

$\fallingdotseq \left| \dfrac{d}{du} \vec{R}_{i,3}(u) \right|_{u=u_m} / M$

---

TIME PERIOD REQUIRED FOR

MOVEMENT OF DISTANCE

IS EVALUATED

$t\,m = D_m / V$

---

RESPECTIVE VALUES IN CASE

WHERE THE RESPECTIVE

DRIVING SYSTEMS ARE APPRO−

XIMATED WITH DELAY T AND

IDLING TIME PERIOD $\tau_d$ IN

ADVANCE THROUGH EXPERIMEN−

TATION AND THESE ARE READ OUT

---

CALCULATION IS MADE OF $\vec{X} =$

$\vec{D} + T \cdot \vec{V}$ USING VALUE $\vec{D}$ AND $\vec{V}$

CALCULATED IN THE FOREGOING

AS COMMANDED VALUES WITH

DELAY CONSIDERED,

WHEREUPON THE SAME OUTPUTTED

FOR RESPECTIVE AXES

---

POSITIONING APPARATUSES OF

RESPECTIVE AXES ARE DRIVEN

BY DELAYING COMMANDED

VALUES AS OUTPUTTED BY

TIME PERIOD SUITED FOR

DELAY TIME PERIOD $\tau_d$

USING TIMER FUNCTION

11

FIG.15

FIG.16

FIG.17

FIG.20

13

FIG.18A

FIG.18B

FIG.19A

FIG.19B